(19) Europäisches Patentamt
European Patent Office
Office européen des brevets

(11) **EP 2 741 410 A2**

(12) **EUROPEAN PATENT APPLICATION**

(43) Date of publication:
**11.06.2014 Bulletin 2014/24**

(51) Int Cl.:
**H02M 5/297** *(2006.01)*

(21) Application number: **13196428.0**

(22) Date of filing: **10.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.12.2012 JP 2012269528**
**23.01.2013 JP 2013010505**

(71) Applicant: **Kabushiki Kaisha Yaskawa Denki**
**Kitakyushu-shi, Fukuoka 806-0004 (JP)**

(72) Inventors:
• **Inomata, Kentaro**
**Kitakyushu-shi, Fukuoka 806-0004 (JP)**
• **Yamanaka, Katsutoshi**
**Kitakyushu-shi, Fukuoka 806-0004 (JP)**
• **Hara, Hidenori**
**Kitakyushu-shi, Fukuoka 806-0004 (JP)**
• **Morimoto, Shinya**
**Kitakyushu-shi, Fukuoka 806-0004 (JP)**
• **Takeda, Kotaro**
**Kitakyushu-shi, Fukuoka 806-0004 (JP)**
• **Tanaka, Takashi**
**Kitakyushu-shi, Fukuoka 806-0004 (JP)**
• **Naka, Takuya**
**Kitakyushu-shi, Fukuoka 806-0004 (JP)**
• **Yoshinaga, Wataru**
**Kitakyushu-shi, Fukuoka 806-0004 (JP)**

(74) Representative: **Grünecker, Kinkeldey, Stockmair & Schwanhäusser**
**Leopoldstrasse 4**
**80802 München (DE)**

(54) **Matrix Converter and Method for Controlling Matrix Converter**

(57) A matrix converter (1) according to an embodiment includes a plurality of bidirectional switches (Sw1 to Sw9; Sw1 to Sw6) and a controller (15). The bidirectional switches (Sw1 to Sw9; Sw1 to Sw6) connect each of phases of an alternating current (AC) power supply (2) with each of phases of a rotary electric machine (3). The controller (15) controls the bidirectional switches (Sw1 to Sw9; Sw1 to Sw6) to perform power conversion control between the AC power supply (2) and the rotary electric machine (3). The controller (15) performs on/off control individually on a plurality of unidirectional switching elements (31, 32) constituting bidirectional switches (Sw1 to Sw9; Sw1 to Sw6) by using both 120-degree conduction control and PWM control.

FIG.1

EP 2 741 410 A2

**Description**

FIELD

The embodiments discussed herein are directed to a matrix converter and a method for controlling the matrix converter.

BACKGROUND

Attention is being focused on matrix converters as a new power converter, because of being capable of suppressing a harmonic current and making effective use of regenerative power. Some matrix converters include a plurality of bidirectional switches that connect each of the phases of an alternating current (AC) power supply with each of the phases of a rotary electric machine and control these bidirectional switches to perform power conversion.

In such matrix converters, a technology is known that stops power conversion operation when the AC power supply becomes low voltage for some reasons. For example, there is a technology that, while a motor is driven with the voltages of each phase of an AC power supply controlled by bidirectional switches, and the AC power supply becomes low voltage, stops power supply to the motor. An example of literature related to the above conventional technology is Japanese Patent Application Laid-open No. 2005-287200.

However, in a matrix converter having a rotary electric machine as a load, it is desired that power conversion operation is continued without being stopped even when the AC power supply becomes low voltage.

One aspect of embodiments has been achieved in view of the above circumstances, and an object thereof is to provide a matrix converter and a method for controlling the matrix converter that can continue power conversion operation even when an AC power supply becomes low voltage.

SUMMARY

A matrix converter according to an embodiment includes a plurality of bidirectional switches and a controller. The bidirectional switches connect each of phases of an alternating current (AC) power supply with each of phases of a rotary electric machine. The controller controls the bidirectional switches to perform power conversion control between the AC power supply and the rotary electric machine. The controller performs on/off control individually on a plurality of unidirectional switching elements constituting the bidirectional switches by using both 120-degree conduction control and PWM control.

One aspect of embodiments can provide a matrix converter and a method for controlling the matrix converter that can continue power conversion operation even when an AC power supply becomes low voltage.

BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:

FIG. 1 is a diagram illustrating a configuration example of a matrix converter according to a first embodiment;
FIG. 2 is a diagram illustrating a configuration example of bidirectional switches illustrated in FIG. 1;
FIG. 3 is a diagram illustrating an example of the configuration of a second drive controller illustrated in FIG. 1;
FIG. 4 is a diagram illustrating an example of the relation between a system reactive current command and a system voltage value;
FIG. 5 is a diagram illustrating a current type inverter model;
FIG. 6 is a diagram illustrating a relation between a system phase and switch control signals of a converter;
FIG. 7 is a diagram illustrating an example of the configuration of a system pulse pattern generator according to the first embodiment;
FIG. 8 is diagram illustrating an example of the operation of the system pulse pattern generator according to the first embodiment;
FIG. 9 is a diagram illustrating the configuration of a modulated wave signal generator according to a first modification of the first embodiment;
FIG. 10 is a diagram illustrating the configuration of an R-phase drive signal generator according to a second modification of the first embodiment;
FIG. 11 is a diagram illustrating a relation between a generator phase and switch drive signals;
FIG. 12 is a diagram illustrating a configuration example of a power conversion unit illustrated in FIG. 1;

FIG. 13 is a diagram illustrating an example of the configuration of a system pulse pattern generator according to a second embodiment;

FIG. 14 is a diagram illustrating an example of the generation procedure of a combined signal output by a combined signal generator of the system pulse pattern generator according to the second embodiment;

FIG. 15 is a diagram illustrating an example of the configuration of an Srp pattern generator in the system pulse pattern generator according to the second embodiment;

FIG. 16 is a diagram illustrating an example of the generation procedure of switch drive signals according to the second embodiment;

FIG. 17 is a diagram illustrating an example of a table held by a selection controller of the system pulse pattern generator according to the second embodiment;

FIG. 18 is a diagram illustrating an example of the configuration of a system pulse pattern generator according to a modification of the second embodiment;

FIG. 19 is a diagram illustrating an example of the configuration of an Srp pattern generator in the system pulse pattern generator according to the modification of the second embodiment;

FIG. 20 is a diagram illustrating a configuration example of a series multiple matrix converter according to a third embodiment;

FIG. 21 is a diagram illustrating an example of the configuration of the power conversion cell illustrated in FIG. 20;

FIG. 22 is a diagram illustrating the configurations of a system pulse pattern generator, a GeGr switch drive signal generator, and a GrGe switch drive signal generator in a series multiple matrix converter; and

FIG. 23 is a flowchart illustrating a process that is executed by a controller according to the embodiments.

DESCRIPTION OF EMBODIMENTS

The following describes embodiments of a matrix converter and a method for controlling the matrix converter disclosed by the present application in detail with reference to the attached drawings. The embodiments disclosed below do not limit the present invention. The embodiments below describe as an example a matrix converter that converts generated power of a rotary electric machine, that is, an AC generator (ACG), and supplies it to an AC power supply. However, the rotary electric machine is not limited to the AG generator and may be, for example, an AC motor. The AC power supply, which is described with a power system (grid) as an example, is not limited thereto.

First embodiment

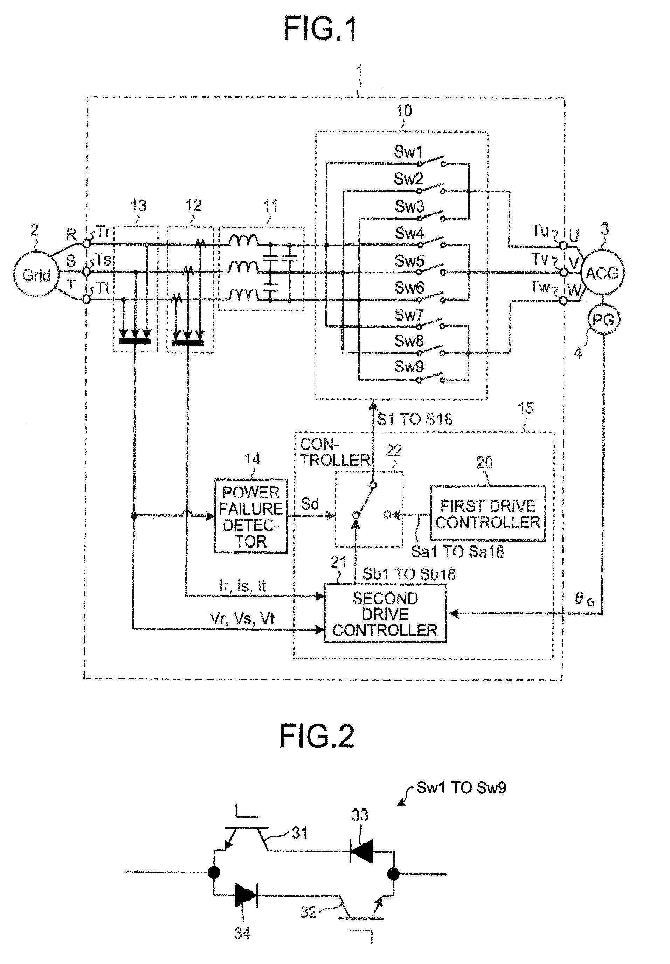

FIG. 1 is a diagram illustrating a configuration example of a matrix converter according to a first embodiment. As illustrated in FIG. 1, this matrix converter 1 is provided in between a three-phase AC power system 2 and a rotary electric machine 3 and performs power conversion between the power system 2 and the rotary electric machine 3. Described below is an example in which a synchronous generator is used as an example of the rotary electric machine 3.

A position detector 4 that detects the rotational position of the rotary electric machine 3 is proved on a rotor shaft of the rotary electric machine 3. The rotational position $\theta_G$ of the rotary electric machine 3 detected by the position detector 4 is input to the matrix converter 1.

The matrix converter 1 includes a power conversion unit 10, an LC filter 11, a current detector 12, a voltage detector 13, a power failure detector 14, and a controller 15. The matrix converter 1 includes system side terminals Tr, Ts, and Tt and generator side terminals Tu, Tv, and Tw. The power system 2 is connected to the system side terminals Tr, Ts, and Tt, and the rotary electric machine 3 is connected to the generator side terminals Tu, Tv, and Tw.

The power conversion unit 10 includes a plurality of bidirectional switches Sw1 to Sw9 that connect the respective R phase, S phase, and T phase of the power system 2 with the U phase, the V phase, and the W phase of the rotary electric machine 3. The bidirectional switches Sw1 to Sw3 are bidirectional switches that respectively connect the R phase, S phase, and T phase of the power system 2 with the U phase of the rotary electric machine 3. The bidirectional switches Sw4 to Sw6 are bidirectional switches that respectively connect the R phase, S phase, and T phase of the power system 2 with the V phase of the rotary electric machine 3. The bidirectional switches Sw7 to Sw9 are bidirectional switches that respectively connect the R phase, S phase, and T phase of the power system 2 with the W phase of the rotary electric machine 3.

The bidirectional switches Sw1 to Sw9 has a configuration illustrated in FIG. 2, for example. FIG. 2 is a diagram illustrating a configuration example of the bidirectional switches Sw1 to Sw9. As illustrated in FIG. 2, each of the bidirectional switches Sw1 to Sw9 is configured by connecting in parallel a serial connected body including a unidirectional switching element 31 and a diode 33 and a serial connected body including a unidirectional switching element 32 and a diode 34.

For the unidirectional switching elements 31 and 32, for example, semiconductor devices such as an insulated gate bipolar transistor (IGBT) are used. By individually turning on/off the unidirectional switching elements 31 and 32 constituting the bidirectional switches Sw1 to Sw9, the conduction direction can be controlled.

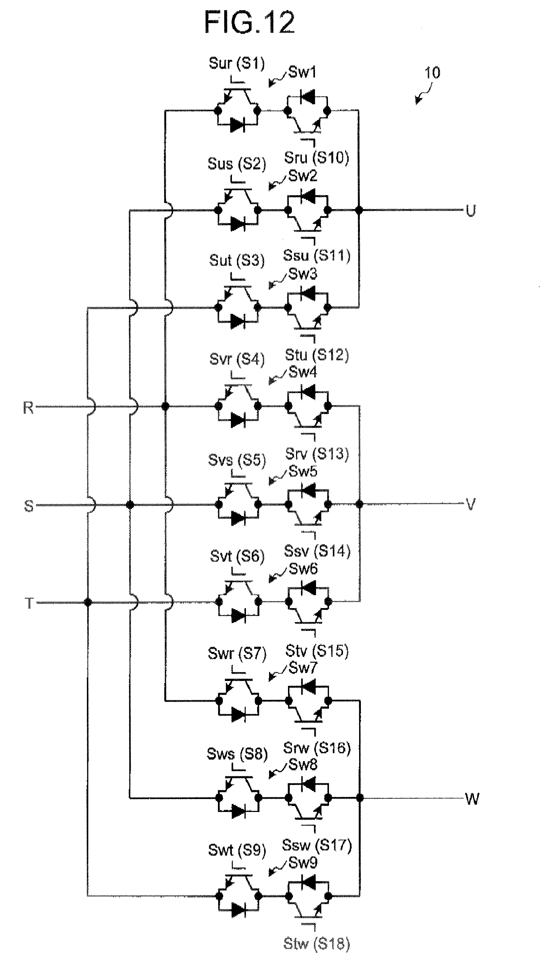

The bidirectional switches Sw1 to Sw9 are not limited to the configuration illustrated in FIG. 2. For example, the bidirectional switches Sw1 to Sw9 may be a configuration in which reverse blocking switching elements are used as the unidirectional switching elements 31 and 32 and these switching elements are connected in parallel in mutually opposite directions or may be a configuration illustrated in FIG. 12 described below.

The LC filter 11 is provided between the R, S, and T phases of the power system 2 and the power conversion unit 10 to suppress the influence of noise from the power conversion unit 10 to the power system 2. Specifically, the LC filter 11 includes three reactors and three capacitors, and removes high-frequency-component noise (pulse-width modulation (PWM) component noise) resulting from the switching of the bidirectional switches Sw1 to Sw9 constituting the power conversion unit 10. This can suppress output of the high-frequency-component noise generated by the power conversion unit 10 to the power system 2. The LC filter 11 is not limited to the configuration illustrated in FIG. 1 and may be configured, for example, without the reactors.

First ends of the three reactors are connected to the power system 2 side between the R phase, S phase, and T phase side and the power conversion unit 10, and second ends of the three reactors are connected to the power conversion unit 10 side. The three capacitors are connected to the second ends of two different reactors.

The current detector 12 is provided in between the power system 2 and the LC filter 11 to detect the current values Ir, Is, and It of currents passing between the respective R phase, S phase, and T phase of the power system 2 and the LC filter 11 (hereinafter, referred to as "system phase current values Ir, Is, and It"). The current detector 12 is a current sensor that detects a current utilizing a Hall element as a magnetoelectric transducer.

The voltage detector 13 is provided in between the power system 2 and the power conversion unit 10 to detect the voltage values Vr, Vs, and Vt of the respective R phase, S phase, and T phase of the power system 2 (hereinafter, referred to as "system phase voltage values Vr, Vs, and Vt").

The power failure detector 14 detects whether a voltage value Va of system voltage (hereinafter, referred to as a system voltage value Va) is a voltage value V1 or less. If the system voltage value Va is less than the voltage value V1, the power failure detector 14 determines that the power system 2 is in a power failure state and outputs a power failure detection signal Sd of a high level. If the system voltage value Va exceeds the voltage value V1, the power failure detector 14 determines that the power system 2 is not in a power failure state and outputs a power failure detection signal Sd of a low level.

The power failure detector 14 converts the system phase voltage values Vr, Vs, and Vt into $\alpha\beta$ components of two orthogonal axes on fixed coordinates to determine an $\alpha$-axial system voltage value $V_\alpha$ and a $\beta$-axial system voltage value $V_\beta$. The power failure detector 14 then calculates the root sum square of the system voltage values $V_\alpha$ and $V_\beta$ ($=\sqrt{(V_\alpha{}^2+V_\beta{}^2)}$) and sets the calculation result to be the system voltage value Va.

The controller 15 includes a first drive controller 20, a second drive controller 21, and a switching unit 22. The first drive controller 20 generates a voltage command based on a torque command that instructs a torque amount the rotary electric machine 3 generates, generates switch drive signals S1 to S18 for outputting to the rotary electric machine 3 a voltage according to the voltage command by a known PWM control method for matrix converters, and outputs the signals to the power conversion unit 10.

The voltage command is generated by a known vector control rule for synchronous generators based on the torque command. The power conversion unit 10 collectively turns on the unidirectional switching elements 31 and 32 constituting the respective bidirectional switches Sw1 to Sw9 with the switch drive signals S1 to S18 and outputs the voltage according to the voltage command by PWM control to perform power conversion in which the magnitude of a passing current and a conduction direction are determined based on the relation between output voltage and generated voltage.

The second drive controller 21 turns on part of the unidirectional switching elements 31 and 32 constituting the respective bidirectional switches Sw1 to Sw9 based on the system phase voltage values Vr, Vs, and Vt and the system phase current values Ir, Is, and It to perform power conversion control.

By turning on part of the unidirectional switching elements 31 and 32 constituting the respective bidirectional switches Sw1 to Sw9, the conduction direction can be controlled. This can prevent a large current from continuing to pass between the rotary electric machine 3 and the power system 2 to perform power conversion operation while performing current control even in such a case as a power failure in which the voltage of the power system 2 is extremely lower than the voltage of the rotary electric machine 3.

For example, the second drive controller 21 keeps a unidirectional switching element that passes a current between any two phases of the power system 2 side among the unidirectional switching elements 31 and 32 constituting the bidirectional switches Sw1 to Sw9 ON. The second drive controller 21 keeps a unidirectional switching element that passes a current between any two phases of the rotary electric machine 3 side among the unidirectional switching elements 31 and 32 constituting the bidirectional switches Sw1 to Sw9 ON. This control can continue to pass a current between any two phases of the power system 2 and between any two phases of the rotary electric machine 3.

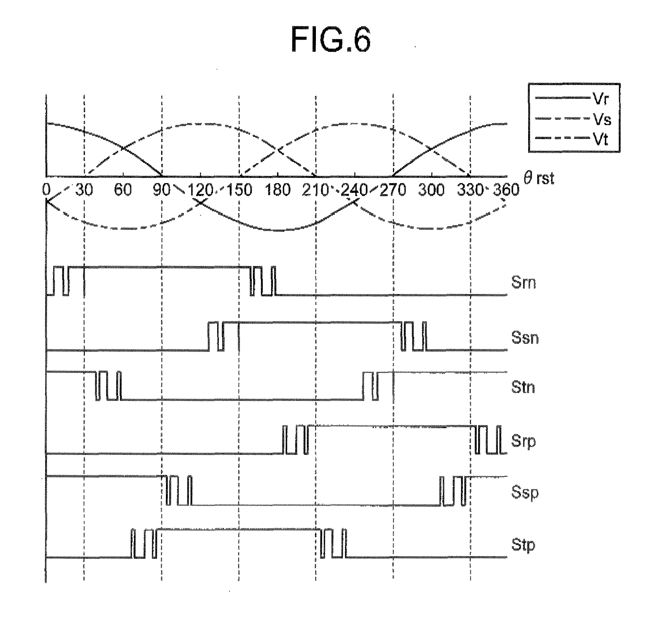

In this control, the second drive controller 21 individually performs on/off control on each of the unidirectional switching elements 31 and 32 constituting the bidirectional switches Sw1 to Sw9 by using both 120-degree conduction control and PWM control to suppress the occurrence of a resonance phenomenon. Details on this point will be described below with reference to FIG. 6 to FIG. 10.

The switching unit 22 selects the switch drive signals S1 to S18 to be output to the power conversion unit 10 and outputs the signals based on the power failure detection signal Sd output from the power failure detector 14. Specifically, if the power failure detection signal Sd output from the power failure detector 14 is at the low level, the switching unit 22 outputs switch drive signals Sa1 to Sa18 generated by the first drive controller 20 as the switch drive signals S1 to S18.

If the power failure detection signal Sd output from the power failure detector 14 is at the high level, the switching unit 22 outputs switch drive signals Sb1 to Sb18 generated by the second drive controller 21 as the switch drive signals S1 to S18.

Accordingly, when the power system 2 becomes low voltage, power conversion control is performed that turns on part of the unidirectional switching elements 31 and 32 constituting the respective bidirectional switches Sw1 to Sw9 with the switch drive signals Sb1 to Sb18 generated by the second drive controller 21. This can continue the power conversion operation even when the power system 2 becomes low voltage.

Thus, the controller 15 performs a first control mode that collectively controls the unidirectional switching elements 31 and 32 constituting the bidirectional switches Sw1 to Sw9 to perform power conversion control and a second mode that individually controls part of the unidirectional switching elements 31 and 32 constituting the bidirectional switches Sw1 to Sw9 to perform power conversion control in a switching manner.

Specifically, in the controller 15, if the system voltage value Va as the voltage of the AC power supply exceeds the voltage value V1 as a predetermined value, the first drive controller 20 performs the first control mode. If the system voltage value Va is the voltage value V1 or less, the second drive controller 21 performs the second control mode.

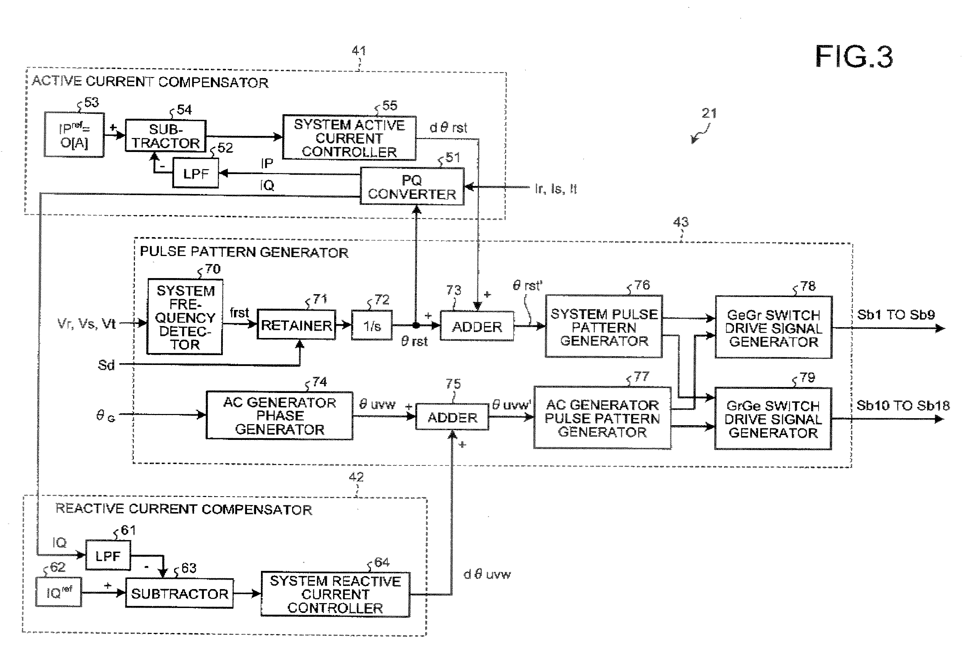

Described below specifically is an example of the specific configuration of the second drive controller 21. FIG. 3 is a diagram illustrating an example of the configuration of the second drive controller 21. As illustrated in FIG. 3, the second drive controller 21 includes an active current compensator 41, a reactive current compensator 42, and a pulse pattern generator 43.

Described first is the active current compensator 41. The active current compensator 41 includes a PQ converter 51, a low-pass filter (LPF) 52, a system active current command unit 53, a subtractor 54, and a system active current controller 55. The active current compensator 41 generates a system phase compensation value $d\theta rst$ so that the system active current value coincides with a system active current command IPref and outputs the generated system phase compensation value $d\theta rst$ to the pulse pattern generator 43.

The PQ converter 51 converts the system phase current values Ir, Is, and It into $\alpha\beta$ components of two orthogonal axes on fixed coordinates to determine an $\alpha$-axial system current value $I_\alpha$ and a $\beta$-axial system current value $I_\beta$. The PQ converter 51 converts the $\alpha\beta$ axial components into components on a rotating coordinate system that rotates according to the voltage phase $\theta rst$ of the power system 2 (hereinafter, referred to as a "system phase $\theta rst$"), thereby determining a system active current IP and a system reactive current IQ.

The PQ converter 51 determines the system active current IP and the system reactive current IQ by, for example, performing the calculation of Formula (1) below.

[Expression 1]

$$\begin{pmatrix} IP \\ IQ \end{pmatrix} = \begin{pmatrix} \cos\theta rst & -\sin\theta rst \\ \sin\theta rst & \cos\theta rst \end{pmatrix} \begin{pmatrix} 1 & -1/2 & -1/2 \\ 0 & \sqrt{3/2} & -\sqrt{3/2} \end{pmatrix} \begin{pmatrix} Ir \\ Is \\ It \end{pmatrix} \cdots (1)$$

The LPF 52 removes a high-frequency-component noise from the system active current IP and outputs the system active current IP to the subtractor 54. This removes the influence of high-frequency-component noise from the system active current IP.

The subtractor 54 calculates a system active current variation as a variation between the system active current command IPref and the system active current IP by subtracting the output of the LPF 52 from the system active current command IPref output from the system active current command unit 53 and outputs the system active current variation to the system active current controller 55.

The system active current controller 55 is, for example, configured from a PI (proportional integration) controller and generates the system phase compensation value $d\theta rst$ by performing a proportional integral operation so that the system active current variation becomes zero. In this case, the system active current command IPref is set to be zero, and the system active current controller 55 generates the system phase compensation value $d\theta rst$ so that the system active current IP becomes zero.

Described next is the reactive current compensator 42. The reactive current compensator 42 includes a low-pass filter (LPF) 61, a system reactive current command unit 62, a subtractor 63, and a system reactive current controller 64. The reactive current compensator 42 generates a generator phase correction value dθuvw so that a system reactive current value coincides with a system reactive current command IQref and outputs the generated generator phase correction value dθuvw to the pulse pattern generator 43.

The subtractor 63 calculates a system reactive current variation as a variation between the system reactive current command IQref and the system reactive current IQ by subtracting the output of the LPF 61 from the system reactive current command IQref output from the system reactive current command unit 62 and outputs the system reactive current variation to the system reactive current controller 64.

The system reactive current controller 64 is, for example, configured from a PI controller and generates the generator phase correction value dθuvw by performing a proportional integral operation so that the system reactive current variation becomes zero. The system reactive current command IQref can be, for example, a value according to the system voltage value Va.

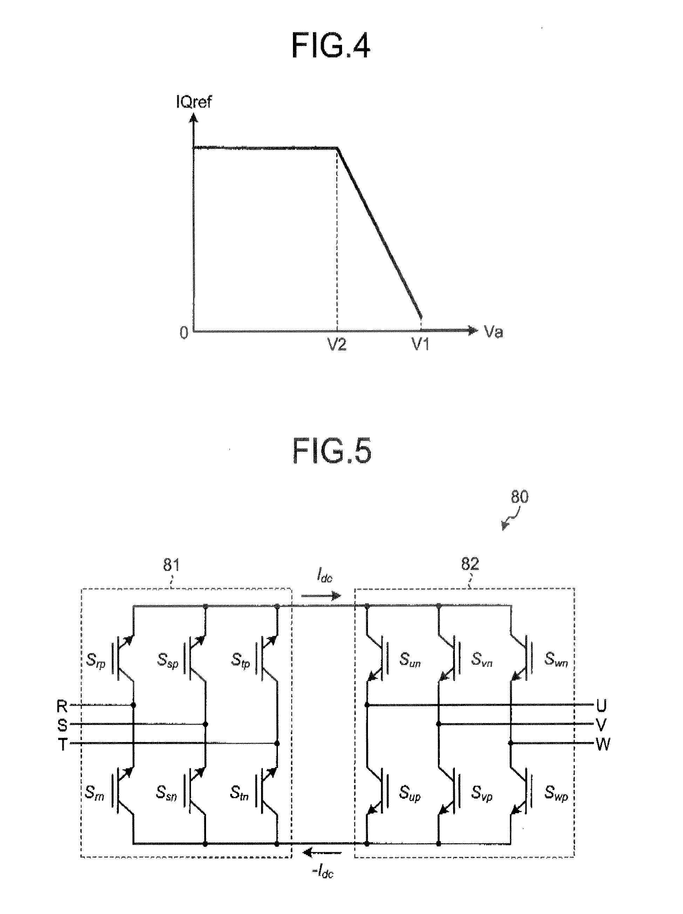

FIG. 4 is a diagram illustrating an example of the relation between the system reactive current command IQref and the system voltage value Va. As illustrated in FIG. 4, the system reactive current command unit 62 generates the system reactive current command IQref that linearly decreases along with an increase in the system voltage value Va in an area in which the system voltage value Va exceeds a voltage value of V2 as a second threshold and is a voltage value of V1 as a first threshold or less.

The system reactive current command unit 62 generates the system reactive current command IQref that is maximized when the system voltage value Va is a voltage value of V2 as the second threshold and that becomes zero in an area in which the system voltage value Va exceeds a voltage value of V1 as the first threshold. The relation between the system reactive current command IQref and the system voltage value Va may be, without limited to the example illustrated in FIG. 4, a different relation.

Described next is the pulse pattern generator 43 illustrated in FIG. 3. The pulse pattern generator 43 generates the switch drive signals S1 to S18 that drive the bidirectional switches Sw1 to Sw9 based on the system phase voltage values Vr, Vs, and Vt, the rotational position θG, the system phase compensation value dθrst, the generator phase correction value dθuvw, and the power failure detection signal Sd.

The pulse pattern generator 43 includes a system frequency detector 70, a retainer 71, an integrator 72, an adder 73, an AC generator phase generator 74, and an adder 75. The pulse pattern generator 43 also includes a system pulse pattern generator 76, an AC generator pulse pattern generator 77, a GeGr switch drive signal generator 78, and a GrGe switch drive signal generator 79.

The system frequency detector 70 is, for example, a phase locked loop (PLL) and outputs a system frequency frst that is in sync with the voltage frequency of the power system 2 based on the system phase voltage values Vr, vs, and Vt.

The retainer 71 retains the system frequency frst output from the system frequency detector 70 at the timing when the power failure detection signal Sd changes from the low level to the high level and releases the retention of the system frequency frst at the timing when the power failure detection signal Sd changes from the high level to the low level.

The integrator 72 integrates the system frequency frst output from the retainer 71, generates the system phase θrst, and outputs the θrst to the active current compensator 41 and the adder 73. The adder 73 adds the system phase compensation value dθrst to the system phase θrst to generate a system corrected phase θrst' and outputs the generated system corrected phase θrst' to the system pulse pattern generator 76.

The AC generator phase generator 74 multiplies the rotational position θG by the polar logarithm of the rotary electric machine 3 to generate a generator phase θuvw and outputs the generator phase θuvw to the adder 75. The adder 75 adds the generator phase correction value dθuvw to the generator phase θuvw to generate a generator corrected phase θuvw' and outputs the generated generator corrected phase θuvw' to the AC generator pulse pattern generator 77.

The pulse pattern generator 43 generates the switch drive signals S1 to S18 using a current type inverter model illustrated in FIG. 5. FIG. 5 is a diagram illustrating a current type inverter model.

This current type inverter model 80 illustrated in FIG. 5 is a model including a converter 81 and an inverter 82. The converter 81 is configured by a plurality of switching elements that are full-bridge connected to the R phase, S phase, and T phase of the power system 2. The respective switching elements of the converter 81 are driven by switch drive signals Srp, Ssp, Stp, Srn, Ssn, and Stn (hereinafter, referred to as "switch drive signals Srp to Stn").

The inverter 82 is configured by a plurality of switching elements that are full-bridge connected to the U phase, the V phase, and the W phase of the rotary electric machine 3. The respective switching elements of the inverter 82 are driven by switch drive signals Sup, Svp, Swp, Sun, Svn, and Swn (hereinafter, referred to as "switch drive signals Sup to Swn").

The system pulse pattern generator 76 has patterns of the switch drive signals Srp to Stn of the converter 81 that passes a current of 120-degree conduction control with respect to the system phase θrst and generates the switch drive signals Srp to Stn according to the system corrected phase θrst'. FIG. 6 is a diagram illustrating a relation between the system phase θrst and the switch drive signals Srp to Stn and represents a relation between the two for passing a current of 120-degree conduction control advanced by 90 degrees with respect to the system phase θrst.

The system corrected phase θrst' is generated through the addition of the system phase compensation value dθrst determined so that the system active current IP becomes zero to the system phase θrst. In view of this, the system pulse pattern generator 76 generates the switch drive signals Srp to Stn as illustrated in FIG. 6 based on the system corrected phase θrst', thereby passing a reactive current that is advanced by 90 degrees and whose system active current IP is zero to the power system 2 side.

The system pulse pattern generator 76 generates the switch drive signals Srp to Stn so that a switching element that passes a current between any two phases of the power system 2 side is kept ON. For example, when being in a range of 0°≤θrst<30° and 330°≤θrst<360°, the switch drive signals Stn, Ssp are at the high level, and the others are at the low level. This causes a current to pass between the T phase and the S phase.

Similarly, when being in a range of 30°≤θrst<90°, the switch drive signals Srn, Ssp are at the high level, which causes a current to pass between the R phase and the S phase. When being in a range of 90°≤θrst<150°, the switch drive signals Srn, Stp are at the high level, which causes a current to pass between the R phase and the T phase. When being in a range of 150°≤θrst<210°, the switch drive signals Ssn, Stp are at the high level, which causes a current to pass between the S phase and the T phase.

When being in a range of 210°≤θrst<270°, the switch drive signals Ssn, Srp are at the high level, which causes a current to pass between the S phase and the R phase. When being in a range of 270°≤θrst<330°, the switch drive signals Stn, Srp are at the high level, which causes a current to pass between the T phase and the R phase. Thus, the system pulse pattern generator 76 generates the pulse patterns so that a current whose phase is advanced by 90 degrees with respect to the system phase θrst passes.

When the 120-degree conduction control is performed on the converter 81 so that a current whose phase is advanced by 90 degrees from a voltage waveform is passed between any two phases of the power system 2, a frequency component that coincides with the resonance frequency of the LC filter 11 is included in the passing current, which causes a resonance phenomenon. When such a resonance phenomenon occurs, distortion occurs in the waveforms of the current and voltage passing between any two phases of the power system 2.

The pulse pattern generator 43 suppresses the occurrence of a resonance phenomenon by performing on/off control on the respective switching elements driven with the switch drive signals Srp to Stn by using both the 120-degree conduction control and the PWM control.

For example, as illustrated in FIG. 6, the system pulse pattern generator 76 of the pulse pattern generator 43 generates a pulse pattern for 120-degree conduction control in which the switch drive signal Srn is at the high level in a range of 30°≤θrst<150°.

In this case, the system pulse pattern generator 76 generates a pulse pattern for PWM control whose pulse width in which the switch drive signal Srn is at the high level becomes large stepwise as θrst becomes close to 30 degrees in a range of 0°≤θrst<30°, for example. The system pulse pattern generator 76 generates a pulse pattern for PWM control whose pulse width in which the switch drive signal Srn is at the high level becomes small stepwise as θrst becomes close to 180 degrees in a range of 150°≤θrst<180°.

For the other switch drive signals Ssn, Stn, Srp, Ssp, and Stp, the system pulse pattern generator 76 also generates pulse patterns for 120-degree conduction control and pulse patterns for PWM control similarly as illustrated in FIG. 6.

The pulse pattern generator 43 generates the switch drive signals S1 to S18 based on these switch drive signals Srp to Stn and the switch drive signals Sup to Swn generated by the AC generator pulse pattern generator 77, which will be described below in detail. This can make the waveform of the current passed between any two phases of the power system 2 close to a sinusoidal waveform, thereby suppressing the occurrence of a resonance phenomenon.

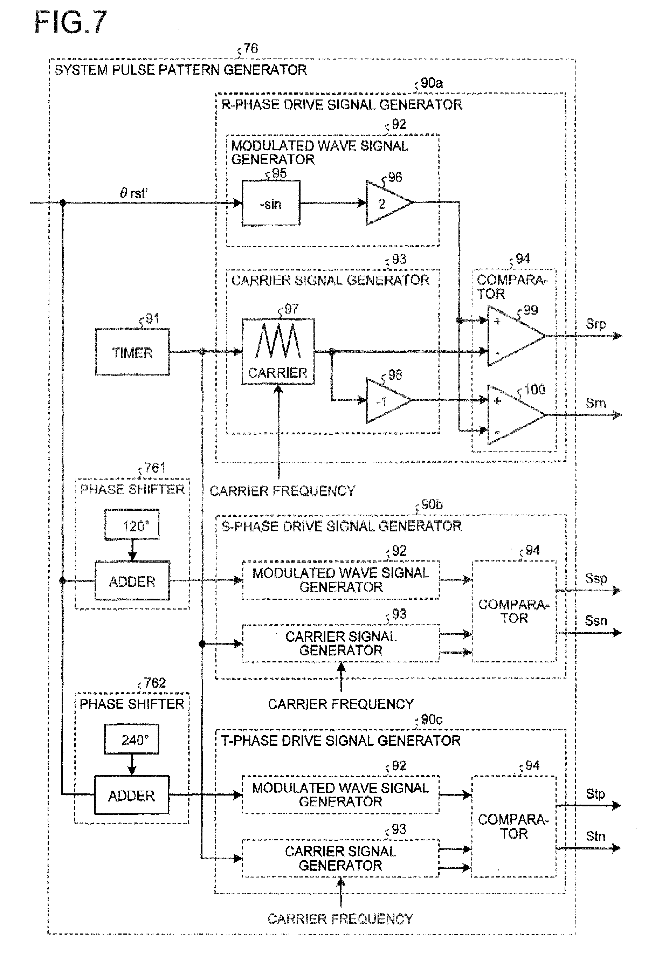

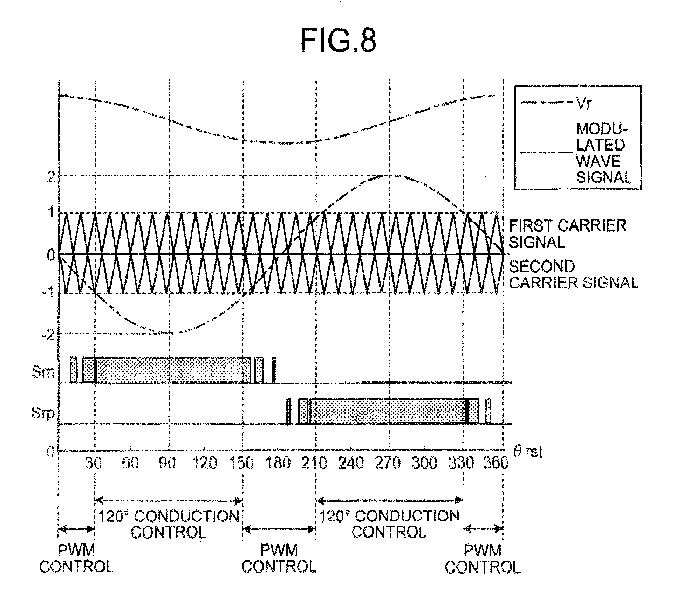

Described with reference to FIG. 7 and FIG. 8 is an example of the specific configuration of the system pulse pattern generator 76 that generates the switch drive signals Srp to Stn. FIG. 7 is a diagram illustrating an example of the configuration of the system pulse pattern generator 76 according to the first embodiment. FIG. 8 is a diagram illustrating an example of the operation of the system pulse pattern generator 76 according to the first embodiment.

As illustrated in FIG. 7, the system pulse pattern generator 76 includes a timer 91, phase shifters 761, 762, an R-phase drive signal generator 90a, an S-phase drive signal generator 90b, and a T-phase drive signal generator 90c.

The timer 91 measures elapsed time from a point in time when the power failure detection signal Sd became the high level. The timer 91 performs time measurement based on an operation clock of a processor (not illustrated) and outputs the measured time to the R-phase drive signal generator 90a, the S-phase drive signal generator 90b, and the T-phase drive signal generator 90c.

The phase shifter 761 adds a phase of 120 degrees to the system corrected phase θrst' input from the adder 73 (see FIG. 3) and outputs the system corrected phase θrst' to the S-phase drive signal generator 90b. The phase shifter 762 adds a phase of 240 degrees to the system corrected phase θrst' input from the adder 73 (see FIG. 3) and outputs the system corrected phase θrst' to the T-phase drive signal generator 90c. To the R-phase drive signal generator 90a, the system corrected phase θrst' is input from the adder 73 (see FIG. 3).

The R-phase drive signal generator 90a generates the switch drive signals Srp, Srn for controlling a current to be passed to the R phase of the power system 2 and outputs the signals to the GeGr switch drive signal generator 78 and the GrGe switch drive signal generator 79 (see FIG. 3).

The S-phase drive signal generator 90b generates the switch drive signals Ssp, Ssn for controlling a current to be passed to the S phase of the power system 2 and outputs the signals to the GeGr switch drive signal generator 78 and the GrGe switch drive signal generator 79 (see FIG. 3).

The T-phase drive signal generator 90c generates the switch drive signals Stp, Stn for controlling a current to be passed to the T phase of the power system 2 and outputs the signals to the GeGr switch drive signal generator 78 and the GrGe switch drive signal generator 79 (see FIG. 3).

The S-phase drive signal generator 90b outputs the switch drive signal Ssn whose phase is delayed by 120 degrees with respect to the switch drive signal Srn and the switch drive signal Ssp whose phase is delayed by 120 degrees with respect to the switch drive signal Srp, and has the same configuration as the R-phase drive signal generator 90a.

The T-phase drive signal generator 90c outputs the switch drive signal Stn whose phase is delayed by 240 degrees with respect to the switch drive signal Srn and the switch drive signal Stp whose phase is delayed by 240 degrees with respect to the switch drive signals Srp, and has the same configuration as the R-phase drive signal generator 90a.

In view of this, described here is the configuration and operation of the R-phase drive signal generator 90a, and for the components of the S-phase drive signal generator 90b and the T-phase drive signal generator 90c, the description thereof will be omitted, with the same reference numerals as the R-phase drive signal generator 90a attached.

The R-phase drive signal generator 90a includes a modulated wave signal generator 92, a carrier signal generator 93, and a comparator 94. The modulated wave signal generator 92 includes a sinusoidal wave generator 95 and an amplifier 96. The sinusoidal wave generator 95 generates a sinusoidal wave signal whose phase is different from the system corrected phase θrst' by 180 degrees input from the adder 73 (see FIG. 3) and outputs the signal to the amplifier 96. Relating to this, the sinusoidal wave generator 95 generates a sinusoidal wave signal whose amplitude varies between "-1" and "1" and outputs the signal to the amplifier 96.

The amplifier 96 amplifies the amplitude of the modulated wave signal input from the sinusoidal wave generator 95 twofold to generate a modulated wave signal (see FIG. 8) and outputs the signal to the comparator 94.

The carrier signal generator 93 includes a triangular wave generator 97 and an amplifier 98. The triangular wave generator 97 generates a first carrier signal as a triangular wave whose amplitude varies between "0" and "1" as illustrated in FIG. 8 based on time input from the timer 91 and a predetermined carrier frequency and outputs the signal to the comparator 94 and the amplifier 98. The amplifier 98 generates a second carrier signal as a triangular wave whose amplitude varies between "0" and "-1" by amplifying the first carrier signal by minus one times as illustrated in FIG. 8, and outputs the signal to the comparator 94.

The comparator 94 includes a first comparator 99 and a second comparator 100. The modulated wave signal is input from the modulated wave signal generator 92 to the noninverting input of the first comparator 99, and the first carrier signal is input from the carrier signal generator 93 to the inverting input of the first comparator 99. The first comparator 99 compares the first carrier signal with the modulated wave signal in succession and generates the switch drive signal Srp that is at the high level in a phase range in which the signal level of the modulated wave signal is larger than the signal level of the first carrier signal.

The first comparator 99 outputs the generated switch drive signal Srp to the GeGr switch drive signal generator 78 and the GrGe switch drive signal generator 79 (see FIG. 3). The waveform of the modulated wave signal compared with the first carrier signal whose amplitude varies between "0" and "1" is a waveform of a sinusoidal wave obtained by amplifying the amplitude of the sinusoidal wave signal whose amplitude varies between "-1" and "1" twofold. Consequently, the switch drive signal Srp is at the high level at all times in a range of 210°≤θrst<330°, being a pulse pattern for 120-degree conduction control.

In a range of 180°≤θrst<210° and a range of 330°≤θrst<360°, the switch drive signal Srp is at the high level intermittently in a phase range in which the modulated wave signal is larger than the first carrier signal, being a pulse pattern for PWM control.

The second carrier signal is input from the carrier signal generator 93 to the noninverting input of the second comparator 100, and the modulated wave signal is input from the modulated wave signal generator 92 to the inverting input of the second comparator 100. The second comparator 100 compares the modulated wave signal with the second carrier signal in succession and generates the switch drive signal Srn that is at the high level in a phase range in which the signal level of the second carrier signal is larger than the signal level of the modulated wave signal.

The second comparator 100 outputs the generated switch drive signal Srn to the GeGr switch drive signal generator 78 and the GrGe switch drive signal generator 79 (see FIG. 3). The switch drive signal Srn is thereby at the high level at all times in a range of 30°≤θrst<150°, being a pulse pattern for 120-degree conduction control.

In a range of 0°≤θrst<30° and a range of 150°≤θrst<180°, the switch drive signal Srn is at the high level intermittently in a phase range in which the second carrier signal is larger than the modulated wave signal, being a pulse pattern for PWM control.

Thus, the R-phase drive signal generator 90a generates the switch drive signals Srp, Srn for performing the 120-degree conduction control and the switch drive signals Srp, Srn for performing the PWM control before and after performing the 120-degree conduction control.

The carrier signal generator 93 illustrated in FIG. 7 may be provided in any one of the R-phase drive signal generator 90a, the S-phase drive signal generator 90b, and the T-phase drive signal generator 90c. For example, the R-phase drive signal generator 90a may selectively provide the carrier signal generator 93. In this case, the first carrier signal and the second carrier signal are supplied to the comparators 94 of the S-phase drive signal generator 90b and the T-phase drive signal generator 90c by the carrier signal generator 93 provided in the R-phase drive signal generator 90a.

Signals obtained by shifting the phase of the modulated wave signal output from the modulated wave signal generator 92 of the R-phase drive signal generator 90a by 120 degrees and 240 degrees may be supplied to the comparators 94 of the S-phase drive signal generator 90b and the T-phase drive signal generator 90c, respectively. This configuration can omit the phase shifters 761, 762 and omit the modulated wave signal generators 92 from the S-phase drive signal generator 90b and the T-phase drive signal generator 90c.

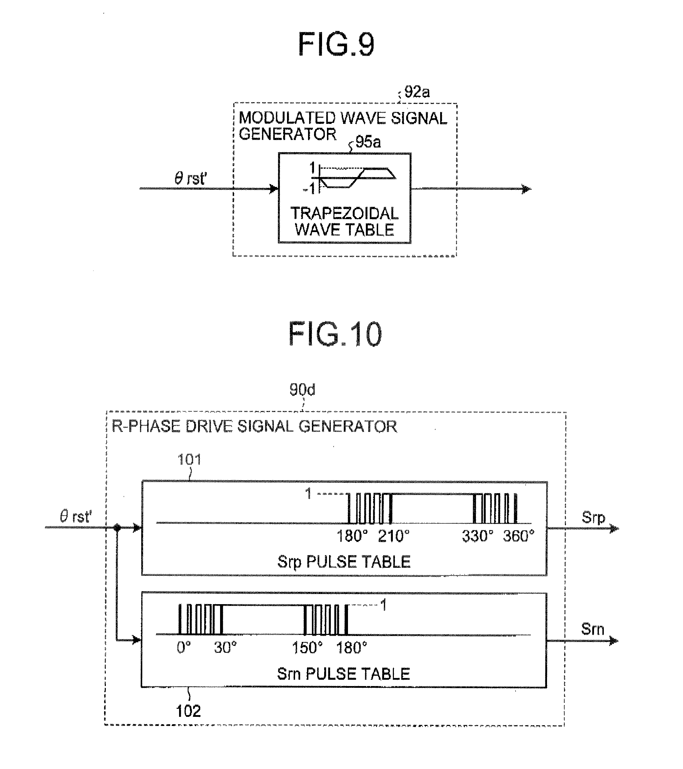

The configuration of the system pulse pattern generator 76 illustrated in FIG. 7 is an example, and further various modifications may be made to the configuration of the modulated wave signal generator 92 and the configurations of the R-phase drive signal generator 90a, the S-phase drive signal generator 90b, and the T-phase drive signal generator 90c. FIG. 9 is a diagram illustrating the configuration of a modulated wave signal generator 92a according to a first modification of the first embodiment, and FIG. 10 is a diagram illustrating the configuration of an R-phase drive signal generator 90d according to a second modification of the first embodiment.

As illustrated in FIG. 9, the modulated wave signal generator 92a according to the first modification includes a trapezoidal wave table 95a in place of the sinusoidal wave generator 95 (see FIG. 7). The trapezoidal wave table 95a is a table that stores a trapezoidal wave whose amplitude is fixed at "1" or "-1" in a phase range in which the 120-degree conduction control is performed and that is a linear in a phase range before and after performing the 120-degree conduction control. The trapezoidal wave table 95a outputs to the comparator 94 the trapezoidal wave with a phase according to the system corrected phase θrst' input from the adder 73 (see FIG. 3).

This kind of R-phase drive signal generator 90a also can generates the switch drive signals Srp, Srn for performing the 120-degree conduction control and the switch drive signals Srp, Srn for performing the PWM control before and after performing the 120-degree conduction control in the same manner as the R-phase drive signal generator 90a illustrated in FIG. 7.

Because this can make the waveform of the current to be passed to the R phase closer to a sinusoidal waveform, the occurrence of a resonance phenomenon can be suppressed. Accordingly, distortion that occurs in the current and voltage waveforms caused by a resonance phenomenon can be reduced.

For the trapezoidal wave stored in the trapezoidal wave table 95a, its amplitude is fixed at "1" or "-1" in the phase range in which the 120-degree conduction control is performed, and it may be a curve that approximates the slope of the corresponding part in the modulated wave signal illustrated in FIG. 8 in the phase range before and after performing the 120-degree conduction control.

As illustrated in FIG. 10, the R-phase drive signal generator 90d according to the second modification includes an Srp pulse table 101 and an Srn pulse table 102. The Srp pulse table 101 is a table that stores therein the switch drive signal Srp the first comparator 99 illustrated in FIG. 7 outputs. The Srn pulse table 102 is a table that stores therein the switch drive signal Srn the second comparator 100 illustrated in FIG. 7 outputs.

The Srp pulse table 101 outputs the switch drive signal Srp with a phase according to the system corrected phase θrst' to be input. The Srn pulse table 102 outputs the switch drive signal Srn with a phase according to the system corrected phase θrst' to be input.

As described above, the system pulse pattern generator 76 generates the pulse patterns of the switch drive signals Srp to Stn that perform on/off control on the switching elements that control the currents to be passed to the respective phases of the power system 2 by using both the 120-degree conduction control and the PWM control. Because this can make the waveform of the currents to be passed to the respective phases of the power system 2 close to a sinusoidal waveform, the occurrence of a resonance phenomenon can be suppressed, and distortion that occurs in the current and voltage waveforms caused by a resonance phenomenon can be reduced.

The system pulse pattern generator 76 generates the pulse patterns of the switch drive signals Srp to Stn for performing the PWM control before and after turning on the switching elements that control the currents to be passed to the respective phases of the power system 2 by the 120-degree conduction control. This can make the waveform of the currents to be passed to the respective phases of the power system 2 close to a sinusoidal waveform more accurately.

The system pulse pattern generator 76 generates the pulse patterns of the switch drive signals Srp to Stn for the 120-degree conduction control and for the PWM control by comparing the modulated wave signal with the first carrier signal and the second carrier signal illustrated in FIG. 8.

Because of this, the system pulse pattern generator 76 does not need to provide separately a processor that generates the switch drive signals Srp to Stn for 120-degree conduction control and a processor that generates the switch drive signals Srp to Stn for PWM control. Accordingly, the system pulse pattern generator 76 can reduce distortion that occurs in the current and voltage waveforms caused by a resonance phenomenon while suppressing an increase in circuit scale.

Described above is a case of performing the PWM control before and after performing the 120-degree conduction control. However, the PWM control may be performed either before or after the 120-degree conduction control is performed. Performing such control also can suppress the occurrence of a resonance phenomenon and reduce distortion that occurs in the current and voltage waveforms caused by a resonance phenomenon as compared to a case of not performing the PWM control.

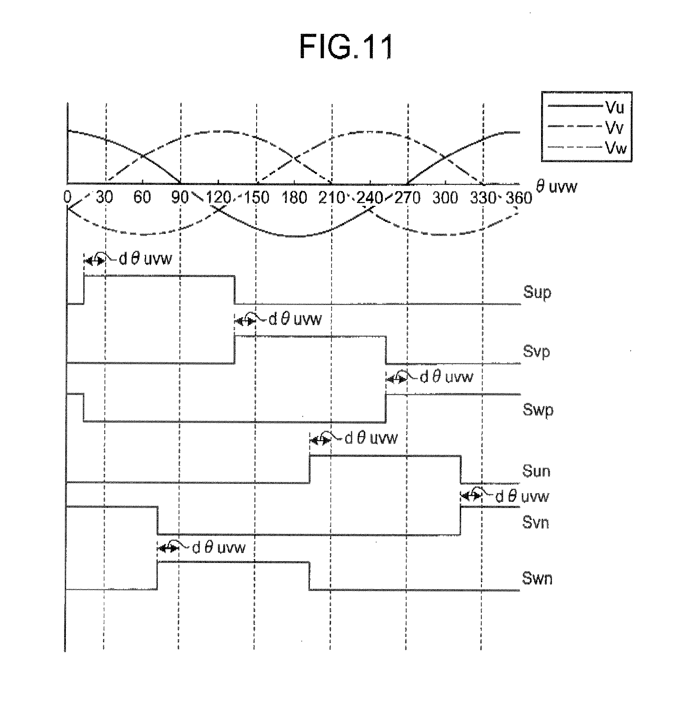

Returning back to FIG. 3, the AC generator pulse pattern generator 77 generates the switch drive signals Sup to Swn according to the generator corrected phase θuvw'. Described here with reference to FIG. 11 is a relation between the generator phase θuvw and the switch drive signals Sup to Swn. FIG. 11 is a diagram illustrating the relation between the generator phase θuvw and the switch drive signals Sup to Swn.

The AC generator pulse pattern generator 77 has patterns of the switch drive signals Sup to Swn of the inverter 82 that passes a current of 120-degree conduction control with respect to the generator phase θuvw and outputs the switch drive signals Sup to Swn according to the generator corrected phase θuvw'.

The generator corrected phase θuvw' is determined through the addition of the generator phase correction value dθuvw determined so that the system reactive current variation as a variation becomes zero to the generator phase θuvw. In view of this, the AC generator pulse pattern generator 77, based on the generator corrected phase θuvw', outputs the switch drive signals Sup to Swn so that a current delayed by 90°-dθuvw with respect to the generator phase θuvw passes as illustrated in FIG. 11. This can pass a reactive current of the same magnitude as the system reactive current command IQref to the power system 2 side.

The AC generator pulse pattern generator 77 generates the switch drive signals Sup to Swn so that a switching element that passes a current between any two phases of the rotary electric machine 3 side is kept ON. For example, when being in a range of 0°≤θuvw-dθuvw<30° and 330°≤θuvw-dθuvw<360°, the switch drive signals Swp, Svn are at the high level, and the others are at the low level. This causes a current to pass between the W phase and the V phase.

Similarly, when being in a range of 30°≤θuvw-dθuvw<90°, the switch drive signals Sup, Svn are at the high level, which causes a current to pass between the U phase and the V phase. When being in a range of 90°≤θuvw-dθuvw<150°, the switch drive signals Sup, Swn are at the high level, which causes a current to pass between the U phase and the W phase. When being in a range of 150°≤θuvw-dθuvw<210°, the switch drive signals Svp, Swn are at the high level, which causes a current to pass between the V phase and the W phase.

When being in a range of 210°≤θuvw-dθuvw<270°, the switch drive signals Svp, Sun are at the high level, which causes a current to pass between the V phase and the U phase. When being in a range of 270°≤θuvw-dθuvw<330°, the switch drive signals Swp, Sun are at the high level, which causes a current to pass between the W phase and the U phase. Thus, the AC generator pulse pattern generator 77 generates the pulse patterns so that a current whose phase is delayed by 90°-dθuvw with respect to the generator phase θuvw passes.

The GeGr switch drive signal generator 78 generates switch drive signals Sur, Sus, Sut, Svr, Svs, Svt, Swr, Sws, and Swt using Formula (2) below based on the switch drive signals Srn, Ssn, Stn, Sup, Svp, Swp.

$$\begin{pmatrix} Sur & Svr & Swr \\ Sus & Svs & Sws \\ Sut & Svt & Swt \end{pmatrix} = \begin{pmatrix} Srn \\ Ssn \\ Stn \end{pmatrix} \begin{pmatrix} Sup & Svp & Swp \end{pmatrix} \dots (2)$$

In Formula (2), as illustrated in FIG. 12, the switch drive signals Sur, Sus, Sut, Svr, Svs, Svt, Swr, Sws, and Swt are signals that drive the unidirectional switching elements 31 and 32 that pass a current from the rotary electric machine 3 side to the power system 2 side among the bidirectional switches Sw1 to Sw9. FIG. 12 is a diagram illustrating a configuration example of the power conversion unit 10. Note that the configuration example of the power conversion unit 10 illustrated in FIG. 12 differs from the example illustrated in FIG. 2 in the configuration of the bidirectional switches Sw1 to Sw9. In other words, in the bidirectional switches Sw1 to Sw9 illustrated in FIG. 12, the collectors of the unidirectional switching elements 31 and 32 in each of the bidirectional switches Sw1 to Sw9 illustrated in FIG. 2 are connected to the diodes 33, 34. Also in this connection configuration, the operation of the bidirectional switches Sw1 to Sw9 illustrated in FIG. 12 is the same as the operation of the bidirectional switches Sw1 to Sw9 illustrated in FIG. 2.

The GrGe switch drive signal generator 79 generates switch drive signals Sru, Ssu, Stu, Srv, Ssv, Stv, Srw, Ssw, Stw using Formula (3) below based on the switch drive signals Sun, Svn, Swn, Srp, Ssp, and Stp.

$$\begin{pmatrix} Sru & Srv & Srw \\ Ssu & Ssv & Ssw \\ Stu & Stv & Stw \end{pmatrix} = \begin{pmatrix} Sun \\ Svn \\ Swn \end{pmatrix} \begin{pmatrix} Srp & Ssp & Stp \end{pmatrix} \quad \dots (3)$$

In Formula (3), as illustrated in FIG. 12, the switch drive signals Sru, Ssu, Stu, Srv, Ssv, Stv, Srw, Ssw, Stw are signals that drive the unidirectional switching elements 31 and 32 that pass a current from the power system 2 side to the rotary electric machine 3 side among the bidirectional switches Sw1 to Sw9.

The thus generated switch drive signals Sur, Sru, Sus, Ssu, Sut, Stu, Svr, Srv, Svs, Ssv, Svt, Stv, Swr, Srw, Sws, Ssw, Swt, Stw are output from the pulse pattern generator 43 to the power conversion unit 10 with the correspondence relation illustrated in FIG. 12 as the switch drive signals S1 to S18.

This keeps a unidirectional switch that passes a current between any two phases of the power system 2 side and that passes a current between any two phases of the rotary electric machine 3 side among the unidirectional switching elements 31 and 32 constituting the bidirectional switches Sw1 to Sw9 ON.

On/off control is individually performed on each of the unidirectional switching elements 31 and 32 constituting the bidirectional switches Sw1 to Sw9 with the switch drive signals S1 to S18 by using both the 120-degree conduction control and the PWM control. Because this can make the waveform of a current to be passed to the power system 2 side close to a sinusoidal waveform, the occurrence of a resonance phenomenon can be suppressed, and the occurrence of distortion in the current waveform and the voltage waveform on the power system 2 side can be suppressed.

Any one of the switch drive signals Srn, Ssn, Stn is at the high level at all times. Any one of the switch drive signals Sup, Svp, Swp is at the high level at all times. Because of this, any one of the unidirectional switching elements that pass a current from the power system 2 side to the rotary electric machine 3 side among the unidirectional switching elements 31 and 32 constituting the bidirectional switches Sw1 to Sw9 is kept ON.

Any one of the switch drive signals Sun, Svn, and Swn is at the high level at all times. Any one of the switch drive signals Srp, Ssp, and Stp is at the high level at all times. Because of this, any one of the unidirectional switching elements that pass a current from the rotary electric machine 3 side to the power system 2 side among the unidirectional switching elements 31 and 32 constituting the bidirectional switches Sw1 to Sw9 is kept ON.

As described above, the controller 15 of the matrix converter 1 according to the first embodiment includes the first drive controller 20 and the second drive controller 21. The first drive controller 20 performs power conversion by voltage control that collectively turns on the unidirectional switching elements 31 and 32 constituting the respective bidirectional switches Sw1 to Sw9. The second drive controller 21 performs power conversion by voltage control that turns on part of the unidirectional switching elements 31 and 32 constituting the respective bidirectional switches Sw1 to Sw9.

The matrix converter 1 performs power conversion control by the first drive controller 20 if the voltage of the power system 2 exceeds a predetermined value and performs power conversion control by the second drive controller 21 if the voltage of the power system 2 is the predetermined value or less. This can cause the matrix converter 1 to continue power conversion operation while passing a reactive current to the power system 2 side even when the power system 2 becomes low voltage.

The second drive controller 21 individually performs on/off control on each of the unidirectional switching elements 31 and 32 constituting the bidirectional switches Sw1 to Sw9 by using both the 120-degree conduction control and the PWM control. This can cause the matrix converter 1 to make the waveform of a current to be passed to the power system 2 side close to a sinusoidal wave, thereby preventing the occurrence of distortion in the voltage waveform and the current waveform by a resonance phenomenon with the LC filter 11 caused by the current to be passed to the power system 2 side.

In a power generation system, in some cases reactive power is required to be supplied to the power system 2 when the power system 2 becomes low voltage caused by a power failure or the like. The matrix converter 1 according to the present embodiment can address the requirement appropriately.

When the system reactive current command IQref that defines the magnitude of reactive power is transmitted from the manager side of the power system 2, the system reactive current command IQref may be output from the system reactive current command unit 62 to a subtractor. This can externally set the magnitude of the reactive current of the power system 2 side.

The second drive controller 21 employs the current type inverter model 80 as a switching model. The converter 81 is given a switching pattern of 120-degree conduction control that passes a current advanced by 90 degrees from a voltage waveform. The inverter 82 is given a switching pattern of 120-degree conduction control having a phase for passing a reactive current of the magnitude according to the system reactive current command IQref. The switching pattern given to the converter 81 and the switching pattern given to the inverter 82 are combined with each other and are output as the switch drive signals for the unidirectional switching elements 31 and 32 constituting the bidirectional switches Sw1 to Sw9.

Because this processing causes the switch drive signals for the unidirectional switching elements 31 and 32 constituting the bidirectional switches Sw1 to Sw9 to be output, the reactive current of the magnitude according to the system reactive current command IQref can be passed to the power system 2 easily and with high precision.

The above embodiment drives the power conversion unit 10 using the switching pattern of 120-degree conduction control. However, the control method is not limited to the switching pattern of 120-degree conduction control. In other words, the method only has to continue power conversion operation while passing a reactive current to the power system 2 side by performing current control that individually controls the unidirectional switching elements 31 and 32, to which various modifications can be made.

The above embodiment describes the rotary electric machine 3 as a synchronous generator. However, the rotary electric machine 3 may be an induction generator. When the rotary electric machine 3 is the induction generator, the matrix converter 1 is, for example, configured as follows.

After the occurrence of a power failure, the induction generator generates a generated voltage caused by residual flux, and the position detector 4 detects the rotation speed of the induction generator. According to a known vector control rule for induction machines, with a torque command for the induction generator set to be nearly zero, the controller 15 generates a slip frequency command based on the torque command and adds it to the rotation speed detected by the position detector 4 to generate an output frequency command.

The controller 15 generates the generator phase θuvw by integrating the output frequency command and adds the generated generator phase θuvw to the generator phase compensation value dθuvw to generate the generator corrected phase θuvw'. This can continue power conversion operation while passing a reactive current to the power system 2 side even when the power system 2 becomes low voltage.

The above embodiment describes an example of adopting a generator as the rotary electric machine 3. However, a motor may be adopted as the rotary electric machine 3. Even when the voltage of the power system 2 becomes low, operation can be continued through the speed electromotive force of the motor.

In other words, although when the voltage of the power system 2 becomes low, power supply from the power system 2 to the motor becomes hard, and yet a rotor of the motor is in a rotating state while it is slowing down. In view of this, electromotive force generated by the rotation is, for example, supplied to the power system 2 as reactive power, thereby continuing operation.

The above embodiment describes the configuration illustrated in FIG. 3 as an example of the active current compensator 41. However, the active current compensator 41 may have a configuration using a table. In other words, the active current compensator 41 may provide a storage unit that stores therein a two-dimensional table indicating the relation between the system active current IP and the system reactive current IQ and the system phase compensation value dθrst, and the system phase compensation value dθrst may be output from the table based on the system phase current values Ir, Is, and It. The system phase compensation value dθrst may be determined through the calculation of dθrst=-tan$^{-1}$(IQ/IP) and be output.

The above embodiment describes the configuration illustrated in FIG. 3 as an example of the reactive current compensator 42. However, the reactive current compensator 42 may have a configuration using a table. In other words, the reactive current compensator 42 provides a storage unit that stores therein a table indicating the relation between the system reactive current command IQref and the generator phase correction value dθuvw, and the generator phase correction value dθuvw may be output from the table based on the system reactive current command IQref.

In the above embodiment, the system pulse pattern generator 76 also can generate the switch drive signals Srp to Stn that pass a current of 120-degree conduction control delayed by 90 degrees with respect to the system phase θrst. This can pass a reactive current that is delayed by 90 degrees and whose system active current IP is zero to the power system 2 side. Whether a reactive current delayed by 90 degrees is passed or a reactive current advanced by 90 degrees is passed to the power system 2 side can be, for example, selected through an external setting on the system pulse pattern generator 76.

Second embodiment

Described next is a matrix converter according to a second embodiment. A matrix converter according to the second embodiment has the same configuration as the matrix converter 1 according to the first embodiment except that a system pulse pattern generator 176 is provided in place of the system pulse pattern generator 76 illustrated in FIG. 3.

In view of this, described here is the system pulse pattern generator 176 according to the second embodiment, and for the components other than the system pulse pattern generator 176, the description thereof will be omitted, with the same reference numerals as the components described in the first embodiment attached.

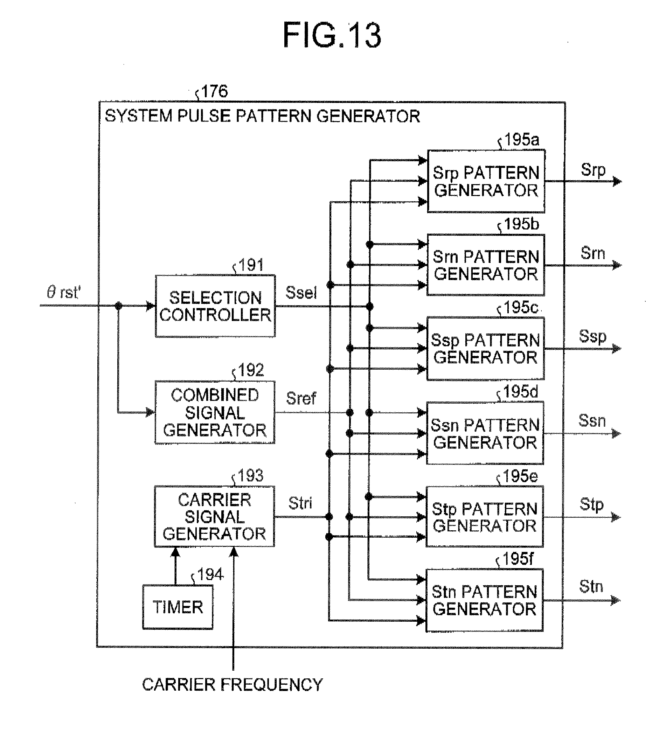

FIG. 13 is a diagram illustrating an example of the configuration of the system pulse pattern generator 176 according to the second embodiment. As illustrated in FIG. 13, the system pulse pattern generator 176 is a processor that generates the switch drive signals Srp to Stn based on the system corrected phase $\theta$rst' input from the adder 73. The system pulse pattern generator 176 includes a selection controller 191, a combined signal generator 192, a carrier signal generator 193, and a timer 194.

The system pulse pattern generator 176 includes an Srp pattern generator 195a, an Srn pattern generator 195b, an Ssp pattern generator 195c, an Ssn pattern generator 195d, an Stp pattern generator 195e, and an Stn pattern generator 195f. When any one of the Srp pattern generator 195a to the Stn pattern generator 195f is indicated below, it will be referred to as the pattern generator 195.

The selection controller 191 outputs to the pattern generator 195 a selection signal Ssel that selects any one of a high level signal SH, a low level signal SL, and a PWM signal Spwm each of the pattern generator 195 can output as a switch drive signal and outputs it.

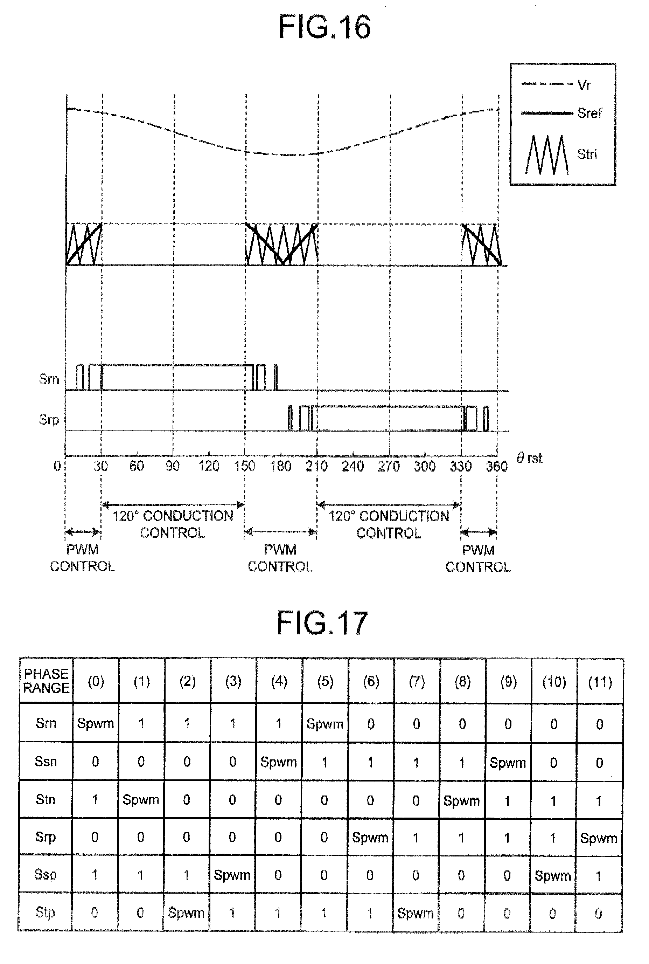

The selection controller 191 outputs the selection signal Ssel to the pattern generator 195 for respective phase ranges obtained by dividing the system phase $\theta$rst from 0 degrees to 360 degrees into 12 equal parts by 30 degrees based on the R phase. Described below with reference to FIG. 17 is an example of the selection signal Ssel to be output to the pattern generator 195 by the selection controller 191 for the respective phase ranges.

The combined signal generator 192 generates a combined signal Sref used when generating parts of the pulse patterns for PWM control included in the switch drive signals Srp to Stn and outputs the combined signal Sref to the pattern generator 195.

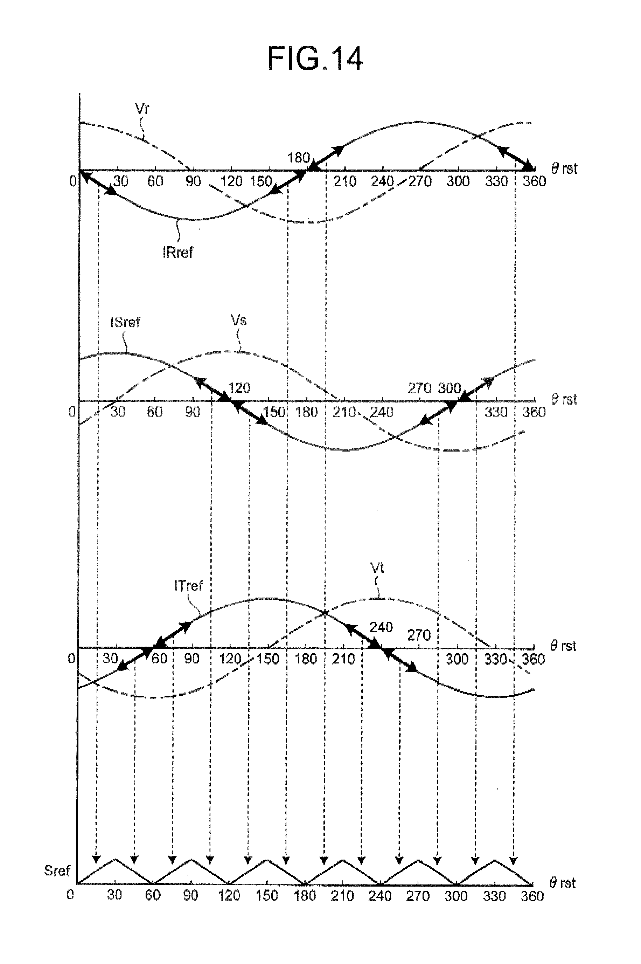

Described here with reference to FIG. 14 is an example of the generation procedure of the combined signal Sref by the combined signal generator 192. FIG. 14 is a diagram illustrating an example of the generation procedure of the combined signal Sref output by the combined signal generator 192 of the system pulse pattern generator 176 according to the second embodiment. Described here is the generation procedure of the combined signal Sref output by the combined signal generator 192 to the pattern generator 195 when the pattern generator 195 generates the switch drive signals Srp to Stn illustrated in FIG. 6.

The switch drive signals Srp to Stn illustrated in FIG. 6 are for passing a current whose phase is advanced by 90 degrees with respect to the voltage value Vr of the R phase to the R phase, passing a current whose phase is advanced by 90 degrees with respect to the voltage value Vs of the S phase to the S phase, and passing a current whose phase is advanced by 90 degrees with respect to the voltage value Vt of the T phase to the T phase.

For this purpose, as illustrated in the first stage from the top in FIG. 14, the combined signal generator 192 generates a current command waveform IRref whose phase is advanced by 90 degrees with respect to the voltage value Vr of the R phase based on the system corrected phase $\theta$rst'. The waveform IRref is a waveform of a current command as a target value of the current to be passed to the R phase.

The combined signal generator 192 similarly generates current command waveforms ISref and ITref for the S phase and T phase, respectively. Specifically, as illustrated in the second stage from the top in FIG. 14, the combined signal generator 192 generates a current command waveform ISref whose phase is advanced by 90 degrees with respect to the voltage value vs of the S phase based on the system corrected phase $\theta$rst'. The waveform ISref is a waveform of a current command as a target value of the current to be passed to the S phase.

Similarly, as illustrated in the third stage from the top in FIG. 14, the combined signal generator 192 generates a current command waveform ITref whose phase is advanced by 90 degrees with respect to the voltage value Vt of the T phase based on the system corrected phase $\theta$rst'. The waveform ITref is a waveform of a current command as a target value of the current to be passed to the T phase.

For example, when generating the pulse pattern of the switch drive signal Srn illustrated in FIG. 6, in a range of 30°≤$\theta$rst<150°, a pulse pattern of the high level may be generated regardless of the current command waveform IRref. In a range of 180°≤$\theta$rst<360°, a pulse pattern of the low level may be generated regardless of the current command waveform IRref. However, In a range of 0°≤$\theta$rst<30° and 150°≤$\theta$rst<180°, it is required to generate a pulse pattern for PWM control according to an increase and decrease of the current command waveform IRref.

Similarly, when generating the pulse pattern of the switch drive signal Srp illustrated in FIG. 6, in a range of 210°≤$\theta$rst<330°, a pulse pattern of the high level may be generated regardless of the current command waveform IRref. In a range of 0°≤$\theta$rst<180°, a pulse pattern of the low level may be generated regardless of the current command waveform IRref. However, In a range of 180°≤$\theta$rst<210° and 330°≤$\theta$rst<360°, it is required to generate a pulse pattern for PWM control according to an increase and decrease of the current command waveform IRref.

In other words, in the current command waveform IRref, ranges including the current command required for generating the switch drive signals Srn, Srp that pass the current to the R phase are 0°≤$\theta$rst<30°, 150°≤$\theta$rst<180°, 180°<$\theta$rst<210°, and 330°<$\theta$rst<360°. In view of this, the combined signal generator 192 extracts the waveforms in the ranges of 0°≤$\theta$rst<30°, 150°≤$\theta$rst<180°, 180°≤$\theta$rst<210°, and 330°≤$\theta$rst<360° in the current command waveform IRref.

For also the current command waveform ISref of the S phase similarly, the combined signal generator 192 extracts ranges including the current command required for generating the switch drive signals Ssn, Ssp that pass the current to the S phase. Specifically, the combined signal generator 192 extracts the waveforms in the ranges of 90°≤θrst<120°, 120°≤θrst<150°, 270°≤θrst<300°, and 300°≤θrst<330° in the current command waveform ISref.

For also the current command waveform ITref of the T phase similarly, the combined signal generator 192 extracts ranges including the current command required for generating the switch drive signals Stn, Stp that pass the current to the T phase. Specifically, the combined signal generator 192 extracts the waveforms in the ranges of 30°≤θrst<60°, 60°≤θrst<90°, 210°≤θrst<240°, and 240°≤θrst<270° in the current command waveform ITref.

The combined signal generator 192 connects the waveforms extracted from the three current command waveforms IRref, ISref, and ITref according to the range of the extracted system phase θrst to combine them, thus generating a combined signal Sref illustrated in the fourth stage from the top in FIG. 14. In this case, the combined signal generator 192 generates the combined signal Sref by combining the waveforms whose current command is positive as they are and combining the waveforms whose current command is negative with the positive and negative thereof reversed.

The combined signal generator 192 outputs the generated combined signal Sref to the pattern generator 195. This can cause the pattern generator 195 to generate a pulse pattern for PWM control by comparing the one kind of carrier signal Stri with the combined signal Sref.

The combined signal generator 192 may store therein the combined signal Sref generated in advance illustrated in the fourth stage from the top in FIG. 14 and output it to the pattern generator 195 with timing according to system corrected phase θrst'. In this case, for example, based on the R phase, output of the combined signal Sref is started when the voltage value Vr of the R phases is maximized. This can reduce the processing load of the combined signal generator 192.

Returning back to FIG. 13, the timer 194 measures elapsed time from a point in time when the power failure detection signal Sd became the high level. The timer 194 performs time measurement based on an operation clock of a processor (not illustrated) and outputs the measured time to the carrier signal generator 193.

Based on time input from the timer 194 and a predetermined carrier frequency, for example, the carrier signal generator 193 generates a triangular wave whose amplitude varies between "0" and a value that is half the maximum value of the current command waveform IPref as the carrier signal Stri. The carrier signal generator 193 outputs the generated carrier signal Stri to the pattern generator 195.

The pattern generator 195 outputs any one pulse pattern among the high level, the low level, and the pulse pattern for PWM control as the switch drive signals Srp to Stn for the respective phase ranges obtained by dividing the system phase θrst from 0 degrees to 360 degrees into 12 equal parts. The pattern generator 195 outputs the generated switch drive signals Srp to Stn to the GeGr switch drive signal generator 78 and the GrGe switch drive signal generator 79.

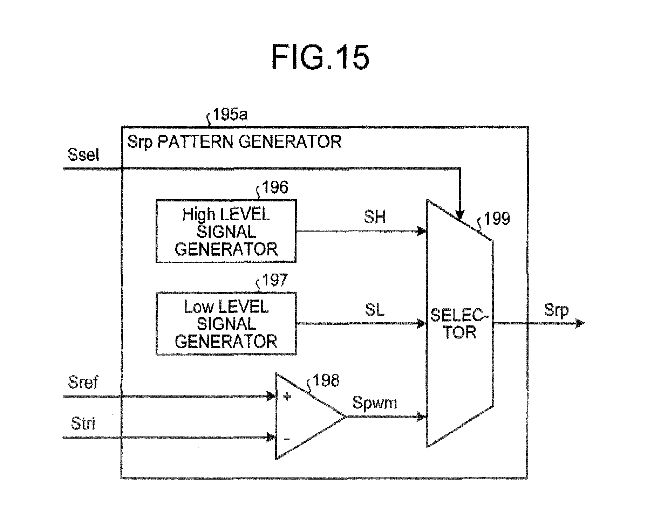

Described next with reference to FIG. 15 is a configuration example of the pattern generator 195. The Srp pattern generator 195a to the Stn pattern generator 195f differ in the pulse pattern selected for the respective phase ranges according to the selection signal Ssel input from the selection controller 191. However, the configurations thereof are all the same. Because of this, described here is a configuration example of the Srp pattern generator 195a.

FIG. 15 is a diagram illustrating an example of the configuration of the Srp pattern generator 195a in the system pulse pattern generator 176 according to the second embodiment. As illustrated in FIG. 15, the Srp pattern generator 195a includes a high level signal generator 196, a low level signal generator 197, a comparator 198, and a selector 199.

The high level signal generator 196 generates the high level signal SH and outputs it to the selector 199. The low level signal generator 197 generates the low level signal SL and outputs it to the selector 199. The comparator 198 compares the carrier signal Stri input from the carrier signal generator 193 with the combined signal Sref input from the combined signal generator 192 and generates a pulse pattern for PWM control (hereinafter, referred to as a "PWM signal Spwm") indicating a comparison result and outputs it to the selector 199.

The selector 199, which is a multiplexer, outputs any one pulse pattern among the high level signal SH, the low level signal SL, and the PWM signal Spwm as the switch drive signal Srp. Similarly, the Srn pattern generator 195b to the Stn pattern generator 195f output the switch drive signals Srn to Stn, respectively.

Described next with reference to FIG. 16 is an operation example of the pattern generator 195. Described here are operation examples of the Srp pattern generator 195a and the Srn pattern generator 195b. FIG. 16 is a diagram illustrating an example of the generation procedure of the switch drive signals Srn, Srp according to the second embodiment.

When a current whose phase is advanced by 90 degrees with respect to the voltage value Vr of the R phase indicated by a one-dot chain line in FIG. 16 is passed to the R phase, the Srn pattern generator 195b outputs the switch drive signal Srn for PWM control in a range of 0°≤θrst<30° and 150°≤θrst<180°. Specifically, the Srn pattern generator 195b selects and outputs the PWM signal Spwm with a pulse pattern that is at the high level when the combined signal Sref is the carrier signal Stri or more and that is at the low level when the combined signal Sref is less than the carrier signal Stri as the switch drive signal Srn.

The Srn pattern generator 195b outputs the switch drive signal Srn for 120-degree conduction control in a range of 30°≤θrst<150°. In other words, the Srn pattern generator 195b selects and outputs the high level signal SH as the switch drive signal Srn. The Srn pattern generator 195b selects and outputs the low level signal SL as the switch drive signal Srn in a range of 180°≤θrst<360°.

The Srp pattern generator 195a outputs the switch drive signal Srp for PWM control in a range of 180°≤θrst<210° and 330°≤θrst<360°. Specifically, the Srp pattern generator 195a selects and outputs the PWM signal Spwm with a pulse pattern that is at the high level when the combined signal Sref is the carrier signal Stri or more and that is at the low level when the combined signal Sref is less than the carrier signal Stri as the switch drive signal Srp.

The Srp pattern generator 195a outputs the switch drive signal Srp for 120-degree conduction control in a range of 210°≤θrst<330°. In other words, the Srp pattern generator 195a selects and outputs the high level signal SH as the switch drive signal Srp. The Srp pattern generator 195a selects and outputs the low level signal SL as the switch drive signal Srp in a range of 0°≤θrst<180°.

The Ssp pattern generator 195c to the Stn pattern generator 195f also similarly output any one of the high level signal SH, the low level signal SL, and the PWM signal Spwm as the switch drive signals Ssp to Stn, respectively, based on the selection signal Ssel for the respective phase ranges.

Described next with reference to FIG. 17 is an example of the selection signal Ssel to be output to the pattern generator 195 for the respective phase ranges by the selection controller 191. FIG. 17 is a diagram illustrating an example of a table held by the selection controller 191 of the system pulse pattern generator 176 according to the second embodiment.

As illustrated in FIG. 17, the selection controller 191 holds a table that associate the respective phase ranges (0) to (11) obtained by dividing the system phase θrst from 0 degrees to 360 degrees into 12 equal parts by 30 degrees and the selection signal Ssel to be output to the pattern generator 195. Srn, Ssn, Stn, Srp, Ssp, and Stp in the table indicate the respective pattern generators 195 as output destinations of the selection signal Ssel.

(0) in the table indicates a phase range of 0°≤θrst<30°, and (1) indicates a phase range of 30°≤θrst<60°. In other words, the table assigns the numbers of (0) to (11) to the respective phase ranges by 30 degrees in ascending order of the phase of the system phase θrst.

Spwm in the table indicates the selection signal Ssel that selects the PWM signal Spwm among the three types of pulse patterns the pattern generator 195 can output. The number "1" without () attached in the table indicates the selection signal Ssel that selects the high level signal SH among the three types of pulse patterns the pattern generator 195 can output. The number "0" without () attached in the table indicates the selection signal Ssel that selects the low level signal SL among the three types of pulse patterns the pattern generator 195 can output.

The selection controller 191 outputs the selection signal Ssel to the pattern generator 195 for the respective phase ranges (0) to (11) based on the table, thereby causing the pattern generator 195 to output the switch drive signals Srp to Stn.

The selection controller 191 can thereby output the switch drive signals Srp to Stn of the pulse patterns illustrated in FIG. 6 from the pattern generator 195. As listed in the table, one of the switch drive signals Srn, Ssn, Stn is kept ON (high level), and one of the switch drive signals Srp, Ssp, and Stp is kept ON in the respective phase ranges (0) to (11). This can prevent all switch opening.

Thus, in the system pulse pattern generator 176, the Srp pattern generator 195a to the Stn pattern generator 195f can generate the PWM signal Spwm based on the combined signal Sref of one kind and the carrier signal Stri of one kind.

This eliminates the need for providing processors that generate the current command waveform and the carrier signal for generating the PWM signal Spwm individually in the Srp pattern generator 195a to the Stn pattern generator 195f of the system pulse pattern generator 176. Accordingly, the configuration of the system pulse pattern generator 176 can be simplified.

The configuration and the operation of the system pulse pattern generator 176 described with reference to FIG. 13 to FIG. 17 are examples and not limited thereto. Described here is a system pulse pattern generator 175A according to a modification of the second embodiment.

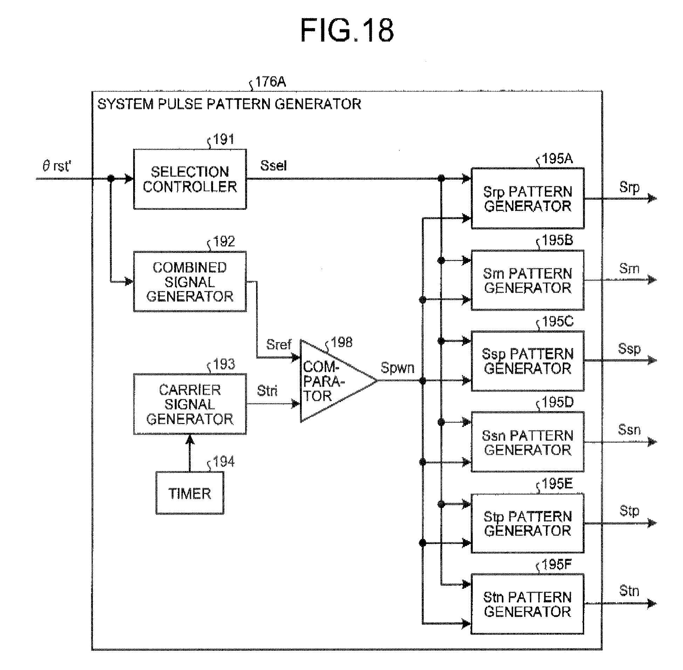

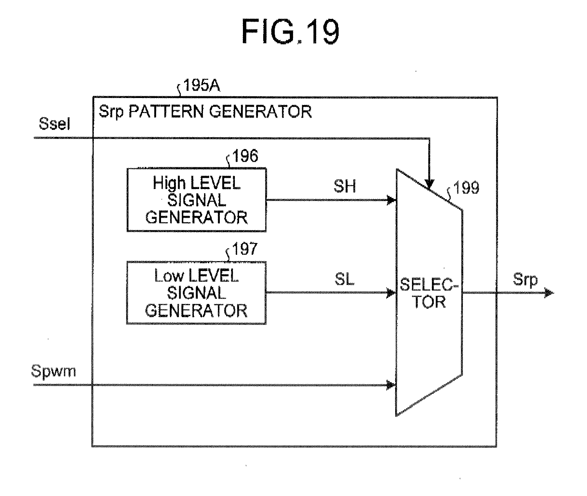

FIG. 18 is a diagram illustrating an example of the configuration of the system pulse pattern generator 176A according to the modification of the second embodiment, and FIG. 19 is a diagram illustrating an example of the configuration of an Srp pattern generator 195A in the system pulse pattern generator 176A according to the modification of the second embodiment.

For components having the same functions as the components illustrated in FIG. 13 and FIG. 15 among the components illustrated in FIG. 18 and FIG. 19, the description thereof will be omitted, with the same reference numerals as those illustrated in FIG. 13 and FIG. 15 attached. In addition, when any one of an Srp pattern generator 195A, an Srn pattern generator 195B, an Ssp pattern generator 195C, an Ssn pattern generator 195D, an Stp pattern generator 195E, and an Stn pattern generator 195F is indicated, it will be referred to as the pattern generator 195.

As illustrated in FIG. 18, the system pulse pattern generator 176A according to the modification is different from the system pulse pattern generator 176 illustrated in FIG. 13 in that the comparator 198 is shared by the six pattern generators 195.

Specifically, the system pulse pattern generator 176A includes one comparator 198 outside the pattern generator 195. The comparator 198 inputs the PWM signal Spwm generated by comparing the carrier signal Stri with the combined signal Sref to the respective pattern generators 195.

As illustrated in FIG. 19, the Srp pattern generator 195A according to the modification is different from the Srp pattern generator 195a illustrated in FIG. 13 in that it does not include the comparator 198 therein and the PWM signal Spwm is input from the comparator 198 externally provided to the selector 199. The six pattern generators 195 have all the same configuration.

In the same manner as the selection controller 191 illustrated in FIG. 13, the selection controller 191 of the system pulse pattern generator 176A outputs the selection signal Ssel to the pattern generator 195 for the respective phase ranges (0) to (11) based on the table illustrated in FIG. 17. This causes the respective pattern generators 195 to output the switch drive signals Srp to Stn.

Thus configuring the system pulse pattern generator 176A can also generate the same switch drive signals Srp to Stn (see FIG. 6) as the system pulse pattern generator 176 described with reference to FIG. 13 to FIG. 17. In addition, the system pulse pattern generator 176A can reduce the number of the comparator 198 and simplify the configuration of the respective pattern generators 195.

As described above, the system pulse pattern generator 176 generates the pulse patterns of the switch drive signals Srp to Stn that perform on/off control on the switching element that passes the currents to the respective phases of the power system 2 by using both the 120-degree conduction control and the PWM control. Because this can make the waveforms of the currents to be passed to the respective phases of the power system 2 close to the waveform of a sinusoidal wave, the occurrence of a resonance phenomenon can be suppressed, and distortion that occurs in the current and voltage waveforms caused by a resonance phenomenon can be reduced.

The system pulse pattern generator 176 generates the pulse patterns of the switch drive signals Srp to Stn for performing the PWM control before and after turning on the switching elements that control the currents to be passed to the respective phases of the power system 2 by the 120-degree conduction control. This can make the waveform of the currents to be passed to the respective phases of the power system 2 close to a sinusoidal waveform more accurately.

Described above is a case of performing the PWM control before and after performing the 120-degree conduction control. However, the PWM control may be performed either before or after the 120-degree conduction control is performed. Performing the control also can suppress the occurrence of a resonance phenomenon and reduce distortion that occurs in the current and voltage waveforms caused by a resonance phenomenon as compared to a case of not performing the PWM control.

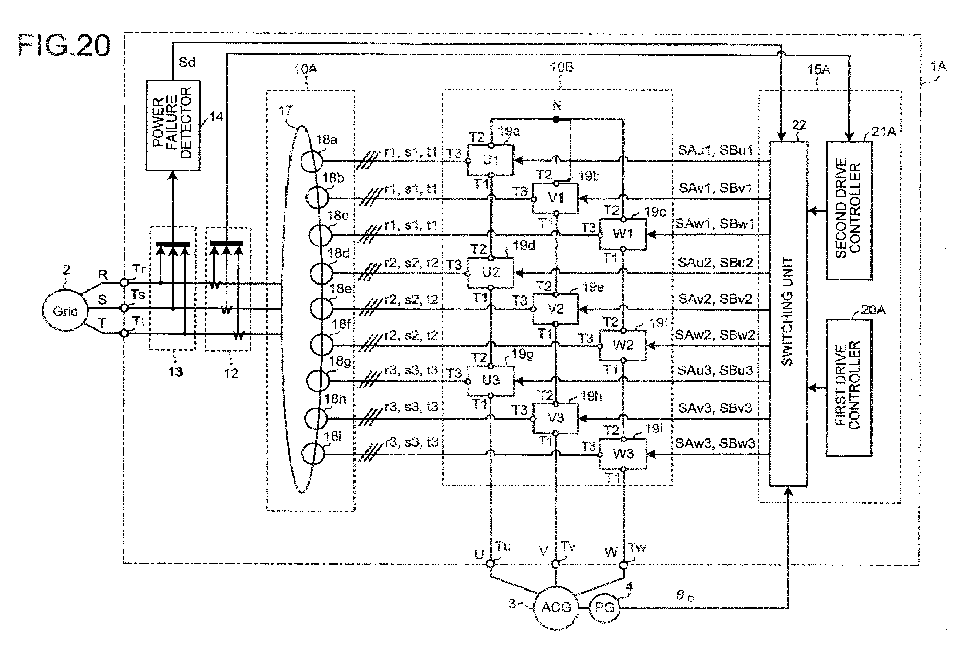

The switching control described in the second embodiment also can be adopted to a series multiple matrix converter in which power conversion cells configured by connecting in series in multiple stages a plurality of power conversion cells are provided for the respective phases. Described below with reference to FIG 20 to FIG. 22 is a series multiple matrix converter 1A according to a third embodiment that adopts the switching control described in the second embodiment.

Third embodiment

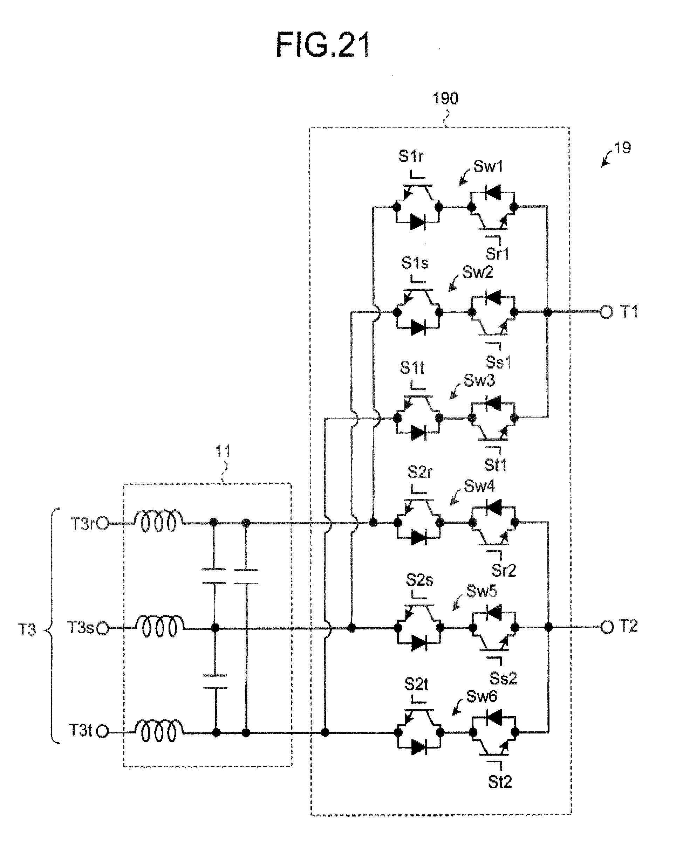

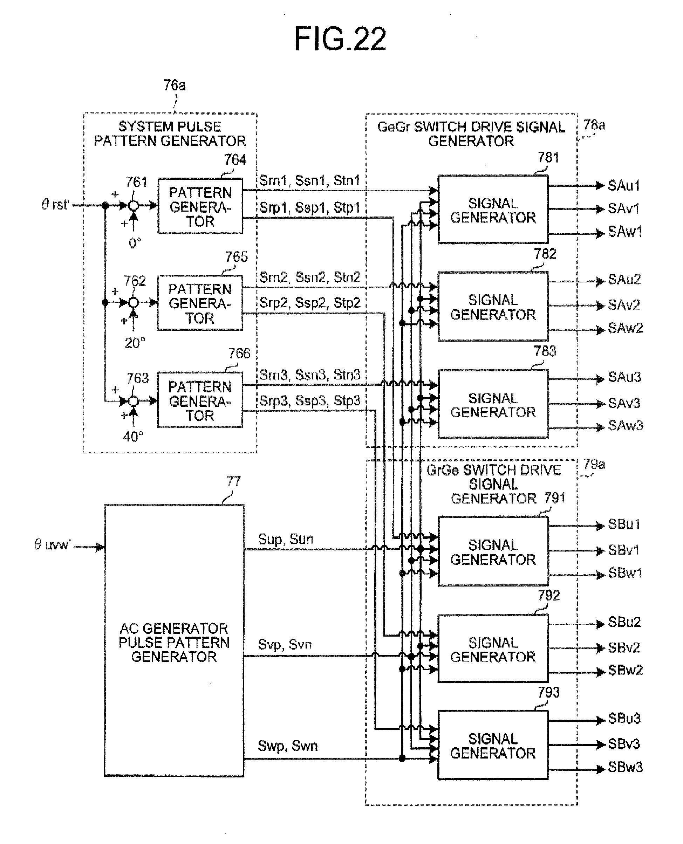

FIG. 20 is a diagram illustrating a configuration example of a series multiple matrix converter 1A according to a third embodiment. FIG. 21 is a diagram illustrating an example of the specific configuration of power conversion cells 19a to 19i (hereinafter, may be collectively referred to as a power conversion cell 19) illustrated in FIG. 20. FIG. 22 is a diagram illustrating the configurations of a system pulse pattern generator 76a, a GeGr switch drive signal generator 78a, and a GrGe switch drive signal generator 79a in the series multiple matrix converter 1A.

For components having the same functions as the components illustrated in FIG. 1 or FIG. 3 among the components illustrated in FIG. 20 to FIG. 22, the description thereof will be omitted, with the same reference numerals as those illustrated in FIG. 1 or FIG. 3 attached.

The series multiple matrix converter 1A illustrated in FIG. 20 is different from that illustrated in FIG. 1 in that a multiple transformer 10A and a power conversion unit 10B are provided in place of the power conversion unit 10 of the matrix converter 1 illustrated in FIG. 1 and in the details of switching control by a controller 15A. The series multiple matrix converter 1A provides the LC filter 11 illustrated in FIG. 1 within the respective power conversion cells 19 (see FIG. 21) described below.

The multiple transformer 10A includes a primary winding 17 and nine secondary windings 18a to 18i (hereinafter, may be collectively referred to as secondary windings 18) and transforms AC power input from the power system 2 into the primary winding 17 and outputs it to the nine secondary windings 18a to 18i. The nine secondary windings 18a to 18i are connected to the power conversion cells 19a to 19i, respectively, described below.

The multiple transformer 10A is a phase-shifting transformer that causes a voltage phase difference between the primary winding 17 and at least part of the secondary windings 18. The multiple transformer 10A gives a voltage phase difference among three secondary windings 18 connected to power conversion units provided corresponding to the U phase, the V phase, and the W phase. Table 1 below lists examples of the voltage phase difference between the primary winding 17 and the secondary windings 18.

[Table 1]

|  | Phase difference (degree) |
| --- | --- |
| First stage (r1, s1, t1) | 0 |
| Second stage (r2, s2, t2) | 20 |
| Third stage (r3, s3, t3) | 40 |

Specifically, in the U phase, the secondary winding 18a corresponding to a position U1 has a voltage phase difference of zero with respect to the primary winding 17; the secondary winding 18d corresponding to a position U2 has a voltage phase difference of 20 degrees advancement with respect to the secondary winding 18a; and the secondary winding 18g corresponding to a position U3 has a voltage phase difference of 20 degrees advancement with respect to the secondary winding 18d. Similarly, in the V phase, the secondary winding 18b corresponding to a position V1 has a voltage phase difference of zero with respect to the primary winding 17; the secondary winding 18e corresponding to a position V2 has a voltage phase difference of 20 degrees advancement with respect to the secondary winding 18b; and the secondary winding 18h corresponding to a position V3 has a voltage phase difference of 20 degrees advancement with respect to the secondary winding 18e.

In the W phase, the secondary winding 18c corresponding to a position W1 has a voltage phase difference of zero with respect to the primary winding 17; the secondary winding 18f corresponding to a position W2 has a voltage phase difference of 20 degrees advancement with respect to the secondary winding 18c; and the secondary winding 18i corresponding to a position W3 has a voltage phase difference of 20 degrees advancement with respect to the secondary winding 18f.

Accordingly, the voltage phase of the r1 phase, s1 phase, and t1 phase of the secondary windings 18a to 18c (hereinafter, referred to as a "voltage phase $\theta$rst1") is the same as the system phase $\theta$rst. The voltage phase of the r2 phase, s2 phase, and t2 phase of the secondary windings 18d to 18f (hereinafter, referred to as a "voltage phase $\theta$rst2") is advanced by 20 degrees with respect to the system phase $\theta$rst. The voltage phase of the r3 phase, s3 phase, and t3 phase of the secondary windings 18g to 18i (hereinafter, referred to as a "voltage phase $\theta$rst3") is advanced by 40 degrees with respect to the system phase $\theta$rst.

By thus setting the voltage phase differences, a harmonic current passing through the primary winding 17 side can be reduced. The phase differences listed in Table 1 are examples, and they may be other values. The phase difference also may not be set. Without using the multiple transformer 10A, separate AC power supplies may be connected to the respective power conversion cells 19a to 19i.

The power conversion unit 10B includes nine power conversion cells 19 that are connected to the respective nine secondary windings 18a to 18i. Each power conversion cell 19 performs power conversion between a terminal T3 (terminals T3r, T3s, T3t described below) connected to the secondary windings 18 and terminals T1, T2.

The secondary windings 18a to 18c are connected to the power conversion cells 19a to 19c that are at the first stages of the U phase, the V phase, and the W phase. The secondary windings 18d to 18f are connected to the power conversion cells 19d to 19f that are at the second stages of the U phase, the V phase, and the W phase. The secondary windings 18g to 18i are connected to the power conversion cells 19g to 19i that are at the third stages of the U phase, the V phase, and the W phase.

In the power conversion unit 10B, the outputs of the three power conversion cells 19 are connected in series to constitute respective output phases. In other words, the power conversion cells 19a, 19d, 19g constitute a power conversion cell unit of the U phase. The power conversion cells 19b, 19e, 19h constitute a power conversion cell unit of the V phase. The power conversion cells 19c, 19f, 19i constitute a power conversion cell unit of the W phase.

Specifically, the terminal T2 of the power conversion cell 19a is connected to a neutral point N. The terminal T1 of the power conversion cell 19a and the terminal T2 of the power conversion cell 19d are connected to each other. The terminal T1 of the power conversion cell 19d and the terminal T2 of the power conversion cell 19g are connected to each other. This constitutes the power conversion cell unit of the U-phase with the terminal T1 of the power conversion cell 19g as an output terminal.

Similarly, the terminal T2 of the power conversion cell 19b is connected to the neutral point N. The terminal T1 of the power conversion cell 19b and the terminal T2 of the power conversion cell 19e are connected to each other. The terminal T1 of the power conversion cell 19e and the terminal T2 of the power conversion cell 19h are connected to each other. This constitutes the power conversion cell unit of the V-phase with the terminal T1 of the power conversion cell 19h as an output terminal.

The terminal T2 of the power conversion cell 19c is connected to the neutral point N. The terminal T1 of the power conversion cell 19c and the terminal T2 of the power conversion cell 19f are connected to each other. The terminal T1 of the power conversion cell 19f and the terminal T2 of the power conversion cell 19i are connected to each other. This constitutes the power conversion cell unit of the W-phase with the terminal T1 of the power conversion cell 19i as an output terminal.

Described here with reference to FIG. 21 is the configuration of the power conversion cell 19. FIG. 21 is a diagram illustrating an example of the specific configuration of the power conversion cell 19. As illustrated in FIG. 21, the power conversion cell 19 includes a switch 190 and the LC filter 11. The power conversion cell 19 is also referred to as a single-phase matrix converter. The power conversion cell 19 provides, for example, a snubber circuit (not illustrated).

The switch 190 includes the bidirectional switches Sw1 to Sw6. The bidirectional switches Sw1 to Sw3 are connected between the terminals T3r, T3s, T3t and the terminal T1. The bidirectional switches Sw4 to Sw6 are connected between the terminals T3r, T3s, T3t and the terminal T2. The bidirectional switches Sw1 to Sw6 have the same configuration as the bidirectional switches Sw1 to Sw9 illustrated in FIG. 12. The LC filter 11 has the same configuration as the LC filter 11 illustrated in FIG. 1. The LC filter 11 is not limited to the configuration illustrated in FIG. 1. For example, without providing the reactors, the LC filter 11 may use leakage inductance of the secondary windings 18 of the multiple transformer 10A instead to which the power conversion cell 19 is connected.

Returning back to FIG. 20, the controller 15A includes a first drive controller 20A, a second drive controller 21A, and the switching unit 22. The first drive controller 20A generates a voltage command based on a torque command that instructs a torque amount the rotary electric machine 3 generates, generates switch drive signals for outputting to the rotary electric machine 3 a voltage according to the voltage command by a known PWM control method for series multiple matrix converters, and outputs the signals to the power conversion unit 10B.

The voltage command is generated by a known vector control rule for synchronous generators based on the torque command. The power conversion unit 10B collectively turns on the unidirectional switching elements constituting the respective bidirectional switches Sw1 to Sw6 with the switch drive signals and outputs the voltage according to the voltage command by the PWM control to perform power conversion in which the magnitude of a passing current and a conduction direction are determined based on the relation between output voltage and generated voltage.

The second drive controller 21A turns on part of the unidirectional switching elements constituting the respective bidirectional switches Sw1 to Sw6 of the power conversion unit 10B to perform power conversion control based on the system phase voltage values Vr, Vs, and Vt and the system phase current values Ir, Is, and It.

By turning on part of the unidirectional switching elements constituting the respective bidirectional switches Sw1 to Sw6, the conduction direction can be controlled. This can prevent a large current from continuing to pass between the rotary electric machine 3 and the power system 2 to perform power conversion operation while performing current control even in such a case as a power failure in which the voltage of the power system 2 is extremely lower than the voltage of the rotary electric machine 3.

For example, the second drive controller 21A keeps a unidirectional switching element that passes a current between any two phases of the secondary windings 18 side among the unidirectional switching elements constituting the bidirectional switches Sw1 to Sw6 of the power conversion unit 10B ON. The second drive controller 21A keeps a unidirectional switching element that passes a current between any two phases of the rotary electric machine 3 side among the unidirectional switching elements constituting the bidirectional switches Sw1 to Sw6 of the power conversion unit 10B ON. This control can continue to pass a current between any two phases of the secondary windings 18 side and between any two phases of the rotary electric machine 3.

The switching unit 22 has the same configuration as the switching unit 22 illustrated in FIG. 1. If the power failure detection signal Sd output from the power failure detector 14 is at the low level, the switching unit 22 outputs the switch drive signals generated by the first drive controller 20A to the power conversion unit 10B.

In contrast, if the power failure detection signal Sd output from the power failure detector 14 is at the high level, the switching unit 22 outputs the switch drive signals generated by the second drive controller 21A to the power conversion unit 10B.

Accordingly, when the power system 2 becomes low voltage, power conversion control is performed that turns on part of the unidirectional switching elements constituting the respective bidirectional switches Sw1 to Sw6 with the switch drive signals generated by the second drive controller 21A. This can continue the power conversion operation even when the power system 2 becomes low voltage.

The power failure detector 14 provided in the series multiple matrix converter 1A can output the power failure detection signal Sd based on the voltage of any of the secondary windings 18a to 18i. For example, if a secondary side voltage value Va1 is a predetermined voltage value V11 or less, the power failure detector 14 determines that the power system 2 is in a power failure state and outputs a power failure detection signal Sd of the high level. If the secondary side voltage value Va1, exceeds the voltage value V11, the power failure detector 14 determines that the power system 2 is not in a power failure state and outputs a power failure detection signal Sd of the low level.

In this case, the power failure detector 14, for example, converts voltages Vr1, Vs1, Vt1 of the r1 phase, s1 phase, and t1 phase of the secondary winding 18a into $\alpha\beta$ components of two orthogonal axes on fixed coordinates to determine an $\alpha$-axial system voltage value $V_\alpha 1$ and a $\beta$-axial system voltage value $V_\beta 1$. The power failure detector 14 then calculates the root sum square of the system voltage values $V_\alpha 1$ and $V_\beta 1$ ($=\sqrt{(V_\alpha 1^2 + V_\beta 1^2)}$) and sets the calculation result to be the secondary side voltage value Va1.

The second drive controller 21A may be the second drive controller 21 illustrated in FIG. 3. When using the second drive controller 21 illustrated in FIG. 3 as the second drive controller 21A, the pulse pattern generator 43 provides the system pulse pattern generator 176 illustrated in FIG. 13.

When using the second drive controller 21 illustrated in FIG. 3, it is required to change the configurations of the system pulse pattern generator 176, the GeGr switch drive signal generator 78, and the GrGe switch drive signal generator 79.

Described here with reference to FIG. 22 is the configurations of a system pulse pattern generator 76a, a GeGr switch drive signal generator 78a, and a GrGe switch drive signal generator 79a provided in the second drive controller 21A when using the second drive controller 21 illustrated in FIG. 3.

As illustrated in FIG. 22, the system pulse pattern generator 76a includes adders 761 to 763 and pattern generators 764 to 766. The adders 761 to 763 add phases according to the voltage phase differences between the primary winding 17 and the secondary windings 18 of the multiple transformer 10A (for example, see Table 1) and output addition results to the pattern generators 764 to 766, respectively. Specifically, the adder 761 adds a phase of 0 degrees to the system corrected phase $\theta$rst'; the adder 762 adds a phase of 20 degrees to the system corrected phase $\theta$rst'; and the adder 763 adds a phase of 40 degrees to the system corrected phase $\theta$rst'.

As described above, the voltage phase differences between the primary winding 17 and the secondary windings 18 are not limited to the examples listed in Table 1. For example, the phase difference between the primary winding 17 and the secondary windings 18a to 18c may be 10 degrees; the phase difference between the primary winding 17 and the secondary windings 18d to 18f may be 30 degrees; and the phase difference between the primary winding 17 and the secondary windings 18g to 18i may be 50 degrees. In this case, the adder 761 adds a phase of 10 degrees to the system corrected phase $\theta$rst'; the adder 762 adds a phase of 30 degrees to the system corrected phase $\theta$rst'; and the adder 763 adds a phase of 50 degrees to the system corrected phase $\theta$rst'.

The pattern generators 764 to 766 generate the patterns of the switch drive signals Srp to Stn of the converter 81 that passes a current by using both the 120-degree conduction control and the PWM control with respect to the $\theta$rst1 to $\theta$rst3 of the respective secondary windings 18 in the same manner as the second embodiment based on the addition results of the adders 761 to 763.

The respective pattern generators 764 to 766 have the same configuration as the system pulse pattern generator 176 illustrated in FIG. 13. When using the system pulse pattern generator 176 illustrated in FIG. 13 as the pattern generators 764 to 766, the timer 194 and carrier signal generator 193 are provided in any one of the pattern generators 764 to 766, with a carrier signal also supplied to the other two ones.

The pattern generator 764 generates switch drive signals Srp1, Ssp1, Stp1, Srn1, Ssn1, and Stn1 (hereinafter, referred to as "switch drive signals Srp1 to Stn1") based on the addition result of the adder 761.

The pattern generator 765 generates switch drive signals Srp2, Ssp2, Stp2, Srn2, Ssn2, and Stn2 (hereinafter, referred to as "switch drive signals Srp2 to Stn2") based on the addition result of the adder 762. The pattern generator 765 generates switch drive signals Srp3, Ssp3, Stp3, Srn3, Ssn3, and Stn3 (hereinafter, referred to as "switch drive signals Srp3 to Stn3") based on the addition result of the adder 763.

The pattern generators 764 to 766 generate the switch drive signals Srp1 to Stn1, Srp2 to Stn2, Srp3 to Stn3, respectively, by performing the same operation as the system pulse pattern generator 176 illustrated in FIG. 13.

The switch drive signals Srp1 to Stn1 are pulse patterns that pass currents whose phase is advanced by 90 degrees with respect to the voltage phase $\theta$rst1 to the secondary windings 18a to 18c, respectively. The relation between the voltage phase $\theta$rst1 of the r1 phase, s1 phase, and t1 phase of the secondary windings 18a to 18c and the switch drive signals Srp1 to Stn1 is the relation illustrated in FIG. 6 with Vr, Vs, and Vt and Srp to Stn are replaced with Vr1, Vs1, and Vt1 and Srp1 to Stn1, respectively.

The switch drive signals Srp2 to Stn2 are signals whose phase is advanced by 20 degrees with respect to the switch drive signals Srp1 to Stn1 and are pulse patterns that pass currents whose phase is advanced by 90 degrees with respect to the voltage phase $\theta$rst2 to the secondary windings 18d to 18f, respectively.

The switch drive signals Srp3 to Stn3 are signals whose phase is advanced by 40 degrees with respect to the switch drive signals Srp1 to Stn1 and are pulse patterns that pass currents whose phase is advanced by 90 degrees with respect to the voltage phase $\theta$rst3 to the secondary windings 18g to 18i, respectively.

Thus, reactive currents with 90 degrees advancement and with active current being zero can be passed to the secondary windings 18a to 18i. This can pass a reactive current with the system active current IP being zero also to the power system 2 side.

The GeGr switch drive signal generator 78a includes signal generators 781 to 783. The signal generators 781 to 783 generate switch drive signals Slr, S1s, S1t, S2r, S2s, and S2t using Formula (4) below based on switch drive signals Srni, Ssni, and Stni (1≤i≤3) output from the pattern generators 764 to 766 and the switch drive signals Sup to Swn output from the AC generator pulse pattern generator 77. As illustrated in FIG. 21, the switch drive signals S1r, S1s, S1t, S2r, S2s, and S2t are signals that drive a unidirectional switch that passes a current from the rotary electric machine 3 side to the secondary windings 18 side among the bidirectional switches Sw1 to Sw6. In Formula (4) below, "*" is "u", "v", or "w".

$$\begin{bmatrix} S1r & Sr1 & S2r & Sr2 \\ S1s & Ss1 & S2s & Ss2 \\ S1t & St1 & S2t & St2 \end{bmatrix} = \begin{bmatrix} Srni & Srpi & Srni & Srpi \\ Ssni & Sspi & Ssni & Sspi \\ Stni & Stpi & Stni & Stpi \end{bmatrix} \begin{bmatrix} S*p & 0 & 0 & 0 \\ 0 & S*n & 0 & 0 \\ 0 & 0 & S*n & 0 \\ 0 & 0 & 0 & S*p \end{bmatrix}$$

$$\dots (4)$$

Specifically, the signal generator 781 generates the switch drive signals S1r, S1s, S1t, S2r, S2s, and S2t of the U phase (hereinafter, denoted as SAu1) using Formula (5) below based on the switch drive signals Srn1, Ssn1, Stn1 output from the pattern generator 764 and the switch drive signals Sup and Sun.

$$\begin{bmatrix} S1r & S2r \\ S1s & S2s \\ S1t & S2t \end{bmatrix} = \begin{bmatrix} Srn1 & Srn1 \\ Ssn1 & Ssn1 \\ Stn1 & Stn1 \end{bmatrix} \begin{bmatrix} Sup & 0 \\ 0 & Sun \end{bmatrix} \dots (5)$$

The signal generator 781 generates the switch drive signals S1r, S1s, S1t, S2r, S2s, and S2t of the V phase (hereinafter, denoted as SAv1) using Formula (6) below based on the switch drive signals Srn1, Ssn1, and Stn1 output from the pattern generator 764 and the switch drive signals Svp and Svn.

$$\begin{bmatrix} S1r & S2r \\ S1s & S2s \\ S1t & S2t \end{bmatrix} = \begin{bmatrix} Srn1 & Srn1 \\ Ssn1 & Ssn1 \\ Stn1 & Stn1 \end{bmatrix} \begin{bmatrix} Svp & 0 \\ 0 & Svn \end{bmatrix} \dots (6)$$

The signal generator 781 generates the switch drive signals S1r, S1s, S1t, S2r, S2s, and S2t of the W phase (hereinafter, denoted as SAw1) using Formula (7) below based on the switch drive signals Srn1, Ssn1, and Stn1 output from the pattern generator 764 and the switch drive signals Swp and Swn.

$$\begin{bmatrix} S1r & S2r \\ S1s & S2s \\ S1t & S2t \end{bmatrix} = \begin{bmatrix} Srn1 & Srn1 \\ Ssn1 & Ssn1 \\ Stn1 & Stn1 \end{bmatrix} \begin{bmatrix} Swp & 0 \\ 0 & Swn \end{bmatrix} \dots (7)$$

The signal generator 782 has the same configuration as the signal generator 781. In the same manner as the signal generator 781, the signal generator 782 generates the switch drive signals S1r, S1s, S1t, S2r, S2s, and S2t of the U phase, the V phase, and the W phase (hereinafter, denoted as SAu2, SAv2, and SAw2, respectively) using the above (5) to (7) based on the switch drive signals Srn2, Ssn2, and Stn2 output from the pattern generator 765 and the switch drive signals Sup to Swn. The values of the switch drive signals Srn2, Ssn2, and Stn2 are set in "Srn1", "Ssn1", and "Stn1", respectively, in the above (5) to (7).

The signal generator 783 has the same configuration as the signal generator 781. The signal generator 783 generates the switch drive signals S1r, S1s, S1t, S2r, S2s, and S2t of the U phase, the V phase, and the W phase (hereinafter, denoted as SAu3, SAv3, and SAw3, respectively) using the above (5) to (7) based on the switch drive signals Srn3, Ssn3, and Stn3 output from the pattern generator 766 and the switch drive signals Sup to Swn. The values of the switch drive signals Srn3, Ssn3, and Stn3 are set in "Srn1", "Ssn1", and "Stn1", respectively, in the above (5) to (7).

The GrGe switch drive signal generator 79a includes signal generators 791 to 793. The signal generators 791 to 793 generate switch drive signals Sr1, Ss1, St1, Sr2, Ss2, and St2 using the above Formula (4) based on switch drive signals Srpi, Sspi, and Stpi ($1 \leq i \leq 3$) output from the pattern generators 764 to 766 and the switch drive signals Sup to Swn output from the AC generator pulse pattern generator 77. As illustrated in FIG. 21, the switch drive signals Sr1, Ss1, St1, Sr2, Ss2, and St2 are signals that drive a unidirectional switch that passes a current from the secondary windings 18 side to the rotary electric machine 3 side among the bidirectional switches Sw1 to Sw6.

Specifically, the signal generator 791 generates the switch drive signals Sr1, Ss1, St1, Sr2, Ss2, and St2 of the U phase (hereinafter, denoted as SBu1) using Formula (8) below based on the switch drive signals Srp1, Ssp1, and Stp1 output from the pattern generator 764 and the switch drive signals Sup and Sun.

$$\begin{bmatrix} Sr1 & Sr2 \\ Ss1 & Ss2 \\ St1 & St2 \end{bmatrix} = \begin{bmatrix} Srp1 & Srp1 \\ Ssp1 & Ssp1 \\ Stp1 & Stp1 \end{bmatrix} \begin{bmatrix} Sun & 0 \\ 0 & Sup \end{bmatrix} \dots (8)$$

The signal generator 791 generates the switch drive signals Sc1, Ss1, St1, Sr2, Ss2, and St2 of the V phase (hereinafter, denoted as SBv1) using Formula (9) below based on the switch drive signals Srp1, Ssp1, and Stp1 output from the pattern generator 764 and the switch drive signals Svp and Svn.

$$\begin{bmatrix} Sr1 & Sr2 \\ Ss1 & Ss2 \\ St1 & St2 \end{bmatrix} = \begin{bmatrix} Srp1 & Srp1 \\ Ssp1 & Ssp1 \\ Stp1 & Stp1 \end{bmatrix} \begin{bmatrix} Svn & 0 \\ 0 & Svp \end{bmatrix} \dots (9)$$

The signal generator 791 generates the switch drive signals Sr1, Ss1, St1, Sr2, Ss2, and St2 of the W phase (hereinafter, denoted as SBw1) using Formula (9) below based on the switch drive signals Srp1, Ssp1, and Stp1 output from the pattern generator 764 and the switch drive signals Swp and Swn.

$$\begin{bmatrix} Sr1 & Sr2 \\ Ss1 & Ss2 \\ St1 & St2 \end{bmatrix} = \begin{bmatrix} Srp1 & Srp1 \\ Ssp1 & Ssp1 \\ Stp1 & Stp1 \end{bmatrix} \begin{bmatrix} Swn & 0 \\ 0 & Swp \end{bmatrix} \dots (10)$$

The signal generator 792 has the same configuration as the signal generator 791. In the same manner as the signal generator 791, the signal generator 792 generates the switch drive signals Sr1, Ss1, St1, Sr2, Ss2, and St2 of the U phase, the v phase, and the W phase (hereinafter, denoted as SBu2, SBv2, and SBw2, respectively) using the above (8) to (10) based on the switch drive signals Srp2, Ssp2, and Stp2 output from the pattern generator 765 and the switch drive signals Sup to Swn. The values of the switch drive signals Srp2, Ssp2, and Stp2 are set in "Srp1", "Ssp1", and "Stp1", respectively, in the above (8) to (10).

The signal generator 793 has the same configuration as the signal generator 791. In the same manner as the signal generator 791, the signal generator 793 generates the switch drive signals Sr1, Ss1, St1, Sr2, Ss2, and St2 of the U phase, the V phase, and the W phase (hereinafter, denoted as SBu3, SBv3, and SBw3, respectively) using the above (8) to (10) based on the switch drive signals Srp3, Ssp3, Stp3 output from the pattern generator 766 and the switch drive signals Sup to Swn. The values of the switch drive signals Srp3, Ssp3, and Stp3 are set in "Srp1", "Ssp1", and "Stp1", respectively, in the above (8) to (10).

The switch drive signals SAu1 to 3, SAv1 to 3, SAw1 to 3, SBu1 to 3, SBv1 to 3, SBw1 to 3 thus generated for the U phase, the V phase, and the W phase are output from the pulse pattern generator 43 to the power conversion unit 10B.

Specifically, as illustrated in FIG. 20, the switch drive signals SAu1 to 3, SBu1 to 3 of the U phase are output to the power conversion cells 19a, 19d, 19g constituting the power conversion cell unit of the U phase. The switch drive signals SAv1 to 3, SBv1 to 3 of the V phase are output to the power conversion cells 19b, 19e, 19h constituting the power conversion cell unit of the V phase. The switch drive signals SAw1 to 3, SBw1 to 3 of the W phase are output to the power conversion cells 19c, 19f, 19i constituting the power conversion cell unit of the W phase.

This keeps a unidirectional switch that passes a current between any two phases of the secondary windings 18 side and that passes a current between any two phases of the rotary electric machine 3 side among the unidirectional switching elements constituting the bidirectional switches Sw1 to Sw6 of the power conversion unit 10B ON.

In the series multiple matrix converter 1A, the three pattern generators 764 to 766 illustrated in FIG. 22 perform the same operation as the system pulse pattern generator 176 illustrated in FIG. 13 or the system pulse pattern generator 176A illustrated in FIG. 18. Specifically, the pattern generators 764 to 766 generate the switch drive signals Srp1 to Stn1, Srp2 to Stn2, Srp3 to Stn3 that perform the PWM control before and after turning on the switching element that controls the currents to be passed to the respective phases of the power system 2 by the 120-degree conduction control.

The series multiple matrix converter 1A performs on/off control on the respective switching elements driven with the switch drive signals Srp1 to Stn1, Srp2 to Stn2, Srp3 to Stn3 by using both the 120-degree conduction control and the PWM control.

The series multiple matrix converter 1A according to the third embodiment can suppress the occurrence of a resonance phenomenon in the same manner as the matrix converter 1 according to the second embodiment, because the waveforms of the currents to be passed to the respective phases of the power system 2 can be made closer to the waveform of a sinusoidal wave.

In the above embodiment, the respective power conversion cell units of the U phase, the V phase, and the W phase connect the power conversion cells 19 in series in three stages. However, the power conversion cells 19 may be connected in series in two stages, and the power conversion cells 19 may be connected in series in four or more stages.

In the above embodiment, part of the functions of the controller 15A may be provided in the power conversion cell 19. For example, part of or the whole of the functions of the second drive controller 21A and the switching unit 22 may be provided for the respective power conversion cells 19.

In the above embodiment, the system pulse pattern generator 76a also can generate the switch drive signals Srp1 to 3 to Stn1 to 3 that pass currents of 120-degree conduction control delayed by 90 degrees with respect to the voltage phases θrst1 to θrst3 of the respective secondary windings 18. This can pass a reactive current that is delayed by 90 degrees and whose system active current IF is zero to the power system 2 side. Whether a reactive current delayed by 90 degrees is passed or a reactive current advanced by 90 degrees is passed to the power system 2 side can be, for example, selected through an external setting on the system pulse pattern generator 76a.

The series multiple matrix converter 1A generates the switch drive signals Srp1 to Stn1 and the like based on the system corrected phase θrst' generated by adding the system phase compensation value dθrst to the system phase θrst. However, this is an example, and a method for generating the switch drive signals Srp1 to Stn1 is not limited to the above method, to which various modifications can be made.

For example, the series multiple matrix converter 1A may generate the switch drive signals Srp1 to Stn1 and the like based on compensated phases θrst1' to θrst3' generated by adding the system phase compensation value dθrst to the respective voltage phases θrst1 to θrst3 of the second windings 18.

In this case, the series multiple matrix converter 1A provides a voltage detector that detects the voltages of the secondary windings 18a, 18d, 18g and outputs the voltages to the second drive controller 21A of the controller 15A, and the second drive controller 21A is configured as follows.

For example, the second drive controller 21A generates the respective voltage phases θrst1 to θrst3 based on the voltages of the secondary windings 18a, 18d, 18g. Subsequently, the second drive controller 21A generates the compensated phases θrst1' to θrst3' generated by adding the system phase compensation value dθrst to the respective voltage phases θrst1 to θrst3.

The second drive controller 21A inputs the compensated phase θrst1' to the pattern generator 764 illustrated in FIG. 22, inputs the compensated phase θrst2' to the pattern generator 765, and inputs the compensated phase θrst3' to the pattern generator 766, respectively. The second drive controller 21A performing the control also can generate the patterns of the switch drive signals Srp1 to Stn1, Srp2 to Stn2, Srp3 to Stn3 that pass currents of 120-degree conduction control with respect to the respective voltage phases θrst1 to θrst3. This can, for example, perform control without performing some settings based on the characteristics of the multiple transformer 10A.

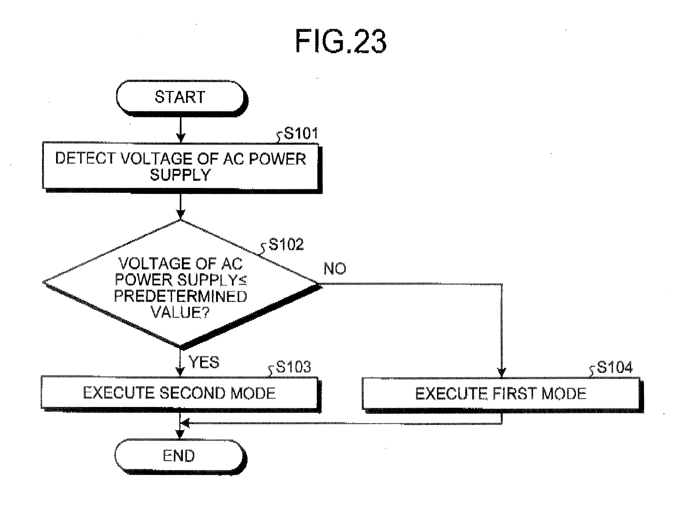

Next, a process that is executed by the controller 15 or 15A according to the embodiments will be explained with reference to FIG. 23. FIG. 23 is a flowchart illustrating a process that is executed by the controller 15 or 15A according to the embodiments.

As illustrated in FIG. 23, the controller 15 or 15A detects the system voltage value Va that is a voltage of the AC power supply (Step S101). Then, the controller 15 or 15A determines whether the detected system voltage value Va is not more than the voltage value V1 that is a predetermined value (Step S102).

When it is determined that the system voltage value Va is not more than the voltage value V1 that is the predetermined value (Step S102: YES), the controller 15 or 15A executes the second control mode. Specifically, the controller 15 or 15A performs on/off control by PWM control on the plurality of unidirectional switching elements 31, 32 constituting the plurality of bidirectional switches SW1 to SW9 or SW1 to Sw6 before, after, or before and after individually turning on the unidirectional switching elements by 120-degree conduction control to perform power conversion control between the AC power supply 2 and the rotary electric machine 3.

After that, the controller 15 or 15A terminates the process, and again starts the process from Step S101. On the other hand, when it is determined that the system voltage value Va is larger than the voltage value V1 that is the predetermined value (Step S102: NO), the controller 15 or 15A executes the first control mode (Step S104), and then terminates the process and again starts the process from Step S101. Because the first control mode has been already explained along with the explanation for the first drive controller 20, the explanation for the first control mode is omitted.

**Claims**

1. A matrix converter (1; 1A), comprising:

   a plurality of bidirectional switches (Sw1 to Sw9; Sw1 to Sw6) that connect each of phases of an alternating current (AC) power supply (2) with each of phases of a rotary electric machine (3); and
   a controller (15; 15A) that controls the bidirectional switches (Sw1 to Sw9; Sw1 to Sw6) to perform power conversion control between the AC power supply (2) and the rotary electric machine (3),
   the controller (15; 15A) performing on/off control individually on a plurality of unidirectional switching elements (31, 32) constituting the bidirectional switches (Sw1 to Sw9; Sw1 to Sw6) by using both 120-degree conduction control and PWM control.

2. The matrix converter (1) according to claim 1, wherein the controller (15) performs the on/off control by the PWM control before and after turning on the unidirectional switching elements (31, 32) by the 120-degree conduction control.

3. The matrix converter (1) according to claim 1 or 2, further comprising a drive signal generator (90a, 90b, 90c) that generates a switch drive signal for controlling the unidirectional switching elements (31, 32) by generating a modulated wave signal larger than a carrier signal in a period of the 120-degree conduction control and comparing the modulated wave signal with the carrier signal.

4. The matrix converter (1) according to claim 3, wherein the modulated wave signal is a sinusoidal wave signal or a trapezoidal wave signal.

5. The matrix converter (1) according to claim 3 or 4, wherein the drive signal generator (90a, 90b, 90c) comprises:

   a carrier signal generator (93) that generates a first carrier signal and a second carrier signal having different polarities as the carrier signal;
   a modulated wave signal generator (92) that generates the modulated wave signal;
   a first comparator (99) that compares the modulated wave signal with the first carrier signal to generate a first switch drive signal; and
   a second comparator (100) that compares the modulated wave signal with the second carrier signal to generate a second switch drive signal,
   the matrix converter (1) controlling the respective unidirectional switching elements (31, 32) with the first switch drive signal and the second switch drive signal.

6. The matrix converter (1) according to claim 1, wherein the controller (15) generates a switch drive signal that controls the unidirectional switching elements (31, 32) in a period of performing the PWM control by comparing a combined signal obtained by extracting and combining the waveforms of parts corresponding to a period of the PWM control from the waveforms of the respective phases according to current commands as target values of currents to be passed to the respective phases of the AC power supply (2) with a carrier signal and performs on/off control on the unidirectional switching elements (31, 32) by the PWM control before and after performing on/off control individually on each of the unidirectional switching elements (31, 32) by the 120-degree conduction control to perform power conversion control between the AC power supply (2) and the rotary electric machine (3).

7. The matrix converter (1) according to claim 6, further comprising:

   a plurality of pattern generators (195a to 195f) that generate and output pulse patterns of a switch drive signal that controls the unidirectional switching elements (31, 32) in a period of the 120-degree conduction control and a switch drive signal that controls the unidirectional switching elements (31, 32) in a period of performing the PWM control; and

a selection controller (191) that selects the pulse patterns output from the pattern generators (195a to 195f).

8. The matrix converter (1) according to claim 7, further comprising:

a combined signal generator (192) that generates the combined signal and outputs the combined signal to the pattern generators (195a to 195f); and

a carrier signal generator (193) that generates the carrier signal and outputs the carrier signal to the pattern generators (195a to 195f).

9. The matrix converter (1) according to claim 7 or 8, wherein the pattern generators (195a to 195f) have the same configuration and are provided for the respective phases of the AC power supply (2).

10. The matrix converter (1) according to any one of claims 7 to 9, wherein the selection controller (191) has a table that associates the range of the voltage phase of the AC power supply (2) with the type of the pulse patterns output from the pattern generators (195a to 195f).

11. The matrix converter (1) according to any one of claims 1 to 10, wherein the controller (15) performs the control in a first control mode that collectively controls the unidirectional switching elements (31, 32) constituting the bidirectional switches (Sw1 to Sw9; Sw1 to Sw6) to perform the power conversion control and a second control mode that individually controls the unidirectional switching elements (31, 32) constituting the bidirectional switches (Sw1 to Sw9; Sw1 to Sw6) to perform the power conversion control in a switching manner.

12. The matrix converter (1) according to claim 11, further comprising:

a voltage detector (13) that detects the voltage of the AC power supply (2), wherein
the controller (15) performs the power conversion control in the first control mode when the voltage of the AC power supply (2) exceeds a predetermined value and performs the power conversion control in the second control mode when the voltage of the AC power supply (2) is the predetermined value or less.

13. The matrix converter (1A) according to any one of claims 1 to 12, wherein a power conversion unit (10B) that performs power conversion by the power conversion control has power conversion cell units configured by connecting in series in multiple stages power conversion cells (19a to 19i) each having a plurality of bidirectional switches (Sw1 to Sw6) for the respective phases of the rotary electric machine (3).

14. A method for controlling a matrix converter (1, 1A), the method comprising:

detecting a voltage of an AC power supply (2);
determining whether the voltage of the AC power supply (2) is not more than a predetermined value; and
performing, when the voltage of the AC power supply (2) is not more than the predetermined value, on/off control by PWM control on a plurality of unidirectional switching elements (31, 32) constituting a plurality of bidirectional switches (Sw1 to Sw9; Sw1 to Sw6) before, after, or before and after individually turning on the unidirectional switching elements (31, 32) by 120-degree conduction control to perform power conversion control between the AC power supply (2) and a rotary electric machine (3).

# FIG.1

# FIG.2

# FIG.3

# FIG.4

# FIG.5

# FIG.6

# FIG.7

# FIG.8

# FIG.9

MODULATED WAVE SIGNAL
GENERATOR
92a

θ rst'

95a

TRAPEZOIDAL
WAVE TABLE

# FIG.10

90d

R-PHASE DRIVE SIGNAL GENERATOR

101

θ rst'

1

180°  210°      330°  360°

Srp PULSE TABLE

Srp

1

0°    30°      150°  180°

Srn PULSE TABLE

Srn

102

# FIG.11

# FIG.12

# FIG.13

# FIG.14

# FIG.15

# FIG.16

| | Vr |
|---|---|
| — Sref |
| Stri |

120° CONDUCTION CONTROL    120° CONDUCTION CONTROL

PWM CONTROL    PWM CONTROL    PWM CONTROL

# FIG.17

| PHASE RANGE | (0) | (1) | (2) | (3) | (4) | (5) | (6) | (7) | (8) | (9) | (10) | (11) |
|---|---|---|---|---|---|---|---|---|---|---|---|---|
| Srn | Spwm | 1 | 1 | 1 | 1 | Spwm | 0 | 0 | 0 | 0 | 0 | 0 |
| Ssn | 0 | 0 | 0 | 0 | Spwm | 1 | 1 | 1 | 1 | Spwm | 0 | 0 |
| Stn | 1 | Spwm | 0 | 0 | 0 | 0 | 0 | 0 | Spwm | 1 | 1 | 1 |
| Srp | 0 | 0 | 0 | 0 | 0 | 0 | Spwm | 1 | 1 | 1 | 1 | Spwm |
| Ssp | 1 | 1 | 1 | Spwm | 0 | 0 | 0 | 0 | 0 | 0 | Spwm | 1 |
| Stp | 0 | 0 | Spwm | 1 | 1 | 1 | 1 | Spwm | 0 | 0 | 0 | 0 |

37

# FIG.18

# FIG.19

FIG.20

# FIG.21

# FIG.22

# FIG.23

```
                    ┌─────────────────┐
                    │     START       │
                    └────────┬────────┘
                             │                    ⌐S101
                    ┌────────▼─────────────────┐
                    │ DETECT VOLTAGE OF AC POWER│
                    │         SUPPLY            │
                    └────────┬─────────────────┘
                             │              ⌐S102
                        ◇────▼────◇
                       ╱  VOLTAGE OF AC ╲         NO
                      ◇  POWER SUPPLY≤   ◇──────────────┐
                       ╲ PREDETERMINED  ╱               │
                        ╲   VALUE?     ╱                │
                         ◇────┬───────◇                 │
                              │YES                      │
                              │  ⌐S103                  │  ⌐S104
                    ┌─────────▼────────┐      ┌──────────▼────────┐
                    │EXECUTE SECOND MODE│      │ EXECUTE FIRST MODE │
                    └─────────┬────────┘      └──────────┬────────┘
                              │◄───────────────────────────┘
                    ┌─────────▼────────┐
                    │       END        │
                    └──────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005287200 A